# EUROPEAN PATENT SPECIFICATION

(11) **EP 1 536 581 B1**
(45) Date of publication and mention of the grant of the patent: **06.12.2006**
(21) Application number: 02760785.2
(22) Date of filing: 30.08.2002
(51) Int. Cl.: H04L 27/26

(54) **System and device using soft decisions in a multi-carrier transmission system**
System und Vorrichtung unter Verwendung weicher Entscheidungen in einem Mehrträgerübertragungssystem
Système et dispositif utilisant décisions douces dans un système de transmission multiporteuse

(43) Date of publication of application: 01.06.2005
(73) Proprietor: FUJITSU LIMITED, Kawasaki-shi, Kanagawa 211-8588 (JP)
(72) Inventor: ALEXANDER N, Lozhkin, c/o Fujitsu Limited, Kawasaki-shi, Kanagawa 211-8588 (JP)
(74) Representative: Sunderland, James Harry
(86) International application number: PCT/JP2002/008764
(87) International publication number: WO 2004/023685

(56) References cited:
- JP-A- 1 125 135
- JP-A- 7 283 806
- JP-A- 2001 168 738
- VITERBO ET AL: "How to combat long echoes in OFDM transmission schemes: Sub-channel equalization or more powerful channel coding" GLOBAL TELECOMMUNICATIONS CONFERENCE, vol. 3, 13 November 1995 (1995-11-13), - 17 November 1995 (1995-11-17) pages 2069-2074, XP002352598

## Description

### Technical Field

This invention relates to a multicarrier communication system and a reception device for such a system, and in particular relates to a multicarrier communication system and reception device for same which utilizes interchannel interference (ICI) between the upper and lower two subchannels and the channel of interest.

### Background Art

The bit error rate (BER) in filter bank modulation, DMT modulation, FMT modulation, and other multicarrier communication systems can be improved through the use of received signals comprised by interchannel interference (ICI). Interchannel interference arises from erroneous operation system operation in communication systems, or due to unavoidable environment conditions such as loss of orthogonality between subcarriers. This interchannel interference is caused by spectral energy leakage, and in some cases by a kind of leakage between subchannels called crosstalk.

A turbo-receiver of this invention is based on a maximum posterior probability algorithm utilizing ICI. In this turbo-receiver, information derived from one subchannel after nonlinear processing is refined by the maximum posterior probability of the other subchannel, and similarly, information derived from the other subchannel is refined by the maximum posterior probability of the first subchannel.

[See for example] K. Sathananthan and C. Tellambura, "Probability of error calculation of OFDM system with frequency offset", IEEE Trans. Commun., Vol. 49, No. 11, Nov. 2001, pp. 1884-1888.

### (a) Relation of frequency offset to ICI

In a multicarrier communication system in which a frequency band is divided into a plurality of independent narrow subbands, and moreover the transmission data for each subband is frequency-multiplexed, transmitted and received, and in particular in a multicarrier communication system employing filter bank modulation, DMT (discrete multitone) modulation, FMT (filtered multitone) modulation and similar, selection of the filter set has been executed under the constraint of completely eliminating intersymbol interference (ISI) and interchannel interference (ICI).

In an ideal transmission channel in which there is no Doppler shift, there is no offset frequency between transmitter and receiver, and moreover signal distortion does not occur, this constraint guarantees the error-free restoration of transmitted symbols in the receiver. However, a frequency offset in a channel, arising from inaccurate oscillator tuning and Doppler shifts, will in turn cause BER degradation due to spectral leakage or ICI.

The only method for alleviating such BER degradation is to reduce the frequency offset to the extent possible, and specifically, to hold the frequency offset to within 1% of the subcarrier frequency interval. However, this method requires accurate estimation of the frequency offset, and in addition when multicarrier signals are received with noise intermixed, if the noise level is high there is the problem that the accuracy of frequency offset estimation is impaired. Further, in a high-speed fading channel, that is, in a channel in which the Doppler shift is not constant for transmission symbols, and in a high-speed fading channel which changes with time, this method does not operate correctly.

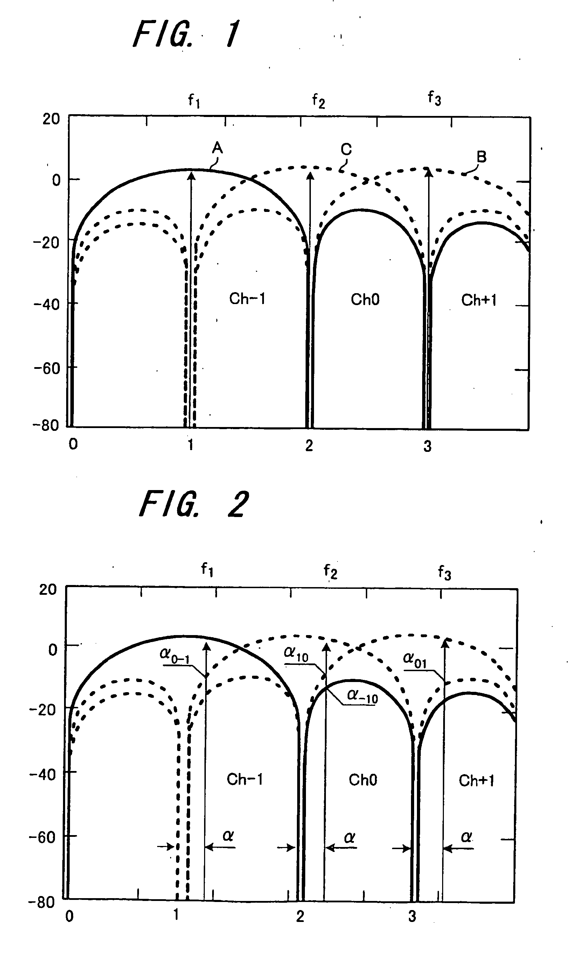

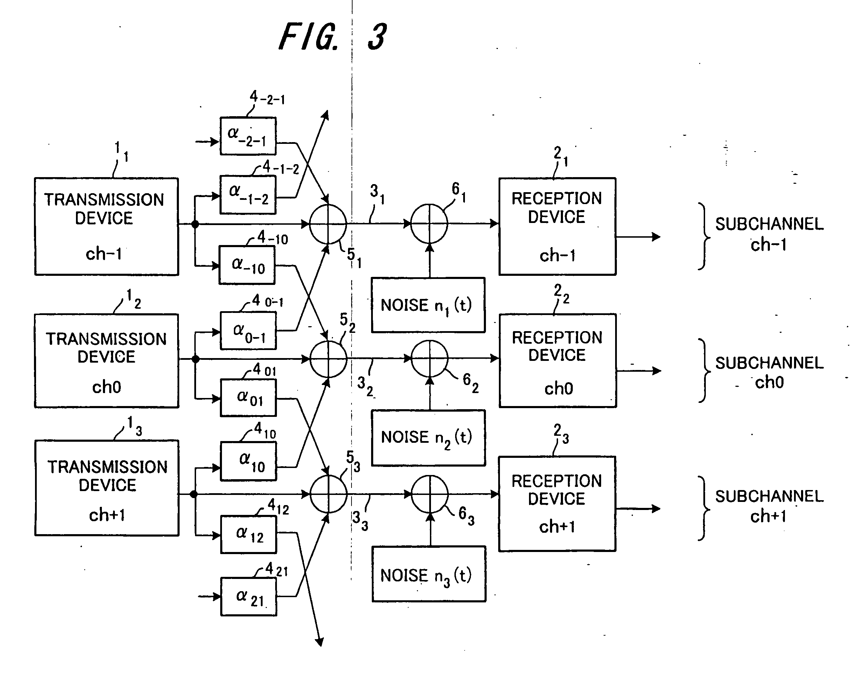

Here, a DMT-base system and an ideal white Gaussian noise channel are supposed. The level of intersymbol interference (ISI) is assumed to be negligible in comparison with interchannel interference (ICI) and other noise signals. To simplify, only the subchannel of interest, a first adjacent subchannel positioned below the subchannel of interest, and a second adjacent subchannel positioned above the subchannel of interest are considered. Fig. 1 and Fig. 2 show the frequency response of the three subchannels cases in which the frequency offset is zero (Fig. 1) and in which the frequency offset is not zero (Fig. 2). The signals of the central frequencies f₁, f₂, f₃ corresponding to the first, second and third subchannels are indicated by vertical arrows in Fig. 1 and Fig. 2. In Fig. 1 and Fig. 2, the subchannel number 0 (ch0) indicates the subchannel of interest, the subchannel number -1 (ch-1) indicates the subchannel positioned below the subchannel of interest on the frequency scale, and the subchannel number +1 (ch+1) indicates the subchannel positioned above the subchannel of interest on the frequency scale. If the DMT symbol period is T, then the frequency scale is normalized by the channel interval, equal to 1/T. That is, one unit of the frequency scale is the channel interval. As shown in Fig. 1, when the frequency offset (normalized by the channel interval) α is 0, the transfer functions of the lower subchannel and upper subchannel, represented by the solid line A and the broken line B in the figure, result in infinite attenuation at the central frequency f₂ of the subchannel of interest (dotted line C). Similarly, the transfer function of the subchannel of interest results in infinite attenuation at the central frequencies f₁ and f₃ of the lower and upper subchannels. That is, if the frequency offset α is zero, then ICI does not occur between adjacent channels. In other words, if the frequency offset is zero, subchannels are orthogonal, and ICI is completely nonexistent.

However, if the frequency offset α is not zero, the subchannel orthogonality collapses and ICI occurs. Fig. 2 shows the spectral characteristics of each subchannel when the frequency offset α is not zero in a DMT system. The spectra of adjacent subchannels clearly have nonzero mutual gains, indicated in Fig. 2 by α₀₋₁, α₁₀, α₋₁₀, α₀₁. In this notation, the first index of α indicates the subchannel which is the source of interference, and the second index indicates the subchannel in which interference occurs. That is, α₀₋₁ indicates the leakage transfer coefficient (amplitude) from the subchannel of interest with number 0 to the lower subchannel with subchannel number -1, α₁₀ indicates the leakage transfer coefficient from the upper subchannel with number +1 to the subchannel of interest with subchannel 0, α₋₁₀ indicates the leakage transfer coefficient from the lower subchannel with subchannel number -1 to the subchannel of interest with number 0, and α₀₁ indicates the leakage transfer coefficient from the subchannel of interest with number 0 to the upper subchannel with subchannel number +1. In this way, if the frequency offset α is not zero, a nonzero mutual gain, that is, ICI between subchannels (crosstalk) occurs.

### (b) Generalized model of communication systems

Fig. 3 is a general model intended to illustrate the mutual ICI between three subchannels in a DMT system having frequency offsets. 1₁, 1₂, 1₃ are transmission devices for the subchannels ch-1, ch0, ch+1; 2₁, 2₂, 2₃ are reception devices for the respective subchannels; 3₁, 3₂, 3₃ are transmission paths for the respective subchannels; 4ᵢⱼ are multipliers to multiply the leakage transfer coefficient (interference coefficient) αᵢⱼ from subchannel number i to subchannel number j by the subchannel signal Di; 5₁, 5₂, 5₃ are synthesis portions which synthesize crosstalk (ICI) from other subchannels with their own subchannel signals; and 6₁, 6₂, 6₃ are noise synthesis portions.

As is clear from Fig. 3, signals from the lower subchannel ch-1 leak into the subchannel of interest ch0 via the crosstalk coefficient α₋₁₀, and signals from the upper subchannel ch+1 leak into the subchannel of interest via the crosstalk coefficient α₁₀. The model of Fig. 3 can also be applied to a multicarrier communication system having N subchannels greater than 3, without limiting the number of subchannels in the entire communication system, if the subchannels undergoing mutual interference are limited to the upper and lower subchannels. However, in this case also interference in each of the subchannels is only from the upper and lower adjacent subchannels. In this case, the interference coefficients describe a coefficient chain. Because of frequency orthogonality between subchannels, the noise components denoted by n₁(t), n₂(t), n₃(t) in Fig. 3 are statistically independent (uncorrelated).

It has been assumed that subchannels are positioned in the frequency domain; however, a similar model can also be applied to other systems, in addition to systems using DMT modulation, filter bank modulation methods and similar.

### (c) Technical problems

The model of Fig. 3 is useful for understanding the physical process which is the cause of ICI. In terms of this model, the problem is to make possible correct determination of the signals received in each subchannel and the values of transmission information symbols (if binary, then codes), even when ICI occurs.

One method which holds the possibility of alleviating ICI in reception devices is adoption of the decision feedback equalizer (DFE) for ICI cancellation proposed in Viterbo and K. Fazel, "How to combat long echoes in QFDM transmission schemes: Subchannel equalization or more powerful channel coding", Proc. IEEE Globecom '95, Singapore, Nov. 1995, pp. 2069-2074.

However, if the outputs of each reception device are in hard bit decision (hard decision) format, then even if information is shared among subchannels, there is only a very slight advantage. This limits the range of operation of DFE, which uses hard decisions.

Even if the above-described approach is useful in numerous actual cases, benefits depend on the extent to which the ICI effect is minimized. This is because ICI comprises information relating to transmission symbols, and there is the possibility that the transmission symbol information comprised by the ICI can be used in satisfactory demodulation of received signals.

In light of the above, an object of this invention is to improve the BER performance using the ICI in a communication system in which ICI exists.

Another object of this invention is to lower the BER based on posterior probabilities utilizing ICI.

### Disclosure of the Invention

This invention relates to a multicarrier communication system in which signals are transmitted and received via at least three adjacent subchannels, comprising (1) a transmission device which transmits data via at least three adjacent subchannels independently; (2) a reception device comprising reception portions, provided for each subchannel, which receives data from the corresponding subchannel, and which perform soft decisions on the received data; and, (3) means for inputting, to the reception portion of the central subchannel, soft-decision values in the reception portions corresponding to the two adjacent subchannels. The reception portion of the central subchannel uses the soft-decision values input from the two adjacent reception portions to adjust its own soft-decision values, and based on the soft decision values, executes decisions on received data.

Each of the above reception portions comprises (1) means for computing, as the above soft decision value, the difference between the probability that data received from the subchannel of interest is one binary value, and the probability that it is the other binary value, taking into account the degree of coupling between subchannels; (2) means for adjusting its own soft decision values, using the above soft decision values input from the two reception portions of the adjacent subchannels; and, (3) a decision portion which executes decisions on received data based on the soft decision values.

The above reception portion of the central subchannel comprises (1) means, when the data transmitted by the three subchannel signals is the same, for creating a first reference signal, calculated taking into account crosstalk from the other two subchannels, and when one among the three data items transmitted by the above three subchannel signals is different, of creating second, third and fourth reference signals, calculated taking into account the crosstalk from the other two subchannels among the three combinations; (2) four correlation means for integrating the respective results of multiplication of the reference signals with the actual received signals; (3) means for synthesizing the outputs of each of the correlation means and for outputting its own soft decision values, as well as for outputting three correlation synthesis signals for use in adjusting soft decision values; (4) first through third addition portions, which add to the above three correlation synthesis signals the above soft decision values input from the reception portions of the adjacent subchannels; (5) means for calculating adjustment values for adjustment of its own soft decision values, based on the addition results of each of the addition portions; (6) an adjustment portion, which adds the above adjustment values to its own soft decision values and adjusts its own soft decision values; and, (7) a decision portion, which executes decisions on received data based on the soft decision values.

Further, the above adjustment value calculation means comprises (1) a first adjustment portion which, based on the addition results of the above first addition portion, calculates a first adjustment value to adjust its own soft decision value; (2) a second adjustment portion which, based on the addition results of the above second addition portion, calculates a second adjustment value to adjust its own soft decision value; and, (3) a third adjustment portion which, based on the addition results of the above third addition portion, calculates a third adjustment value to adjust its own soft decision value; and, each adjustment portion indicates a negative amplitude limit value for negative input, indicates a positive amplitude limit value for positive input, and moreover is configured with a nonlinear unit comprising a linear relation between input and output close to and on both sides of zero input.

### Brief Description of the Drawings

Fig. 1 shows the frequency characteristics when the frequency offset is zero;
Fig. 2 shows the frequency characteristics when the frequency offset is not zero;
Fig. 3 is a general model used to explain a multicarrier communication system in which ICI exists;
Fig. 4 shows the overall configuration of a communication system of this invention, in which interference between a subchannel of interest and the upper and lower two adjacent subchannels is utilized to demodulate data received in the subchannel of interest;
Fig. 5 shows the configuration of a reception device (called a turbo-receiver), based on maximum posterior probability utilizing ICI, of this invention;
Fig. 6 is an explanatory diagram of constellations of the subchannel of interest in each of the portions of the communication system, and constellations of the subchannel of interest according to the number of repetitions;
Fig. 7 shows the transfer function of a nonlinear unit;
Fig. 8 shows the mean BER performance characteristic of a receiver of this invention and of a conventional matched-filter receiver when α₀₁=α₀₋₁=0.25;
Fig. 9 shows the mean BER performance of a turbo-receiver of this invention and of a conventional matched-filter-based receiver, as a function of the ICI coupling coefficient α, and with Eb/N₀ as a parameter;
Fig. 10 shows the configuration of a DMT-based communication system to which a turbo-receiver is applied;
Fig. 11 shows the BER performance of a conventional DMT-based receiver, as well as the BER performance of a DMT receiver (N=4) comprising turbo-processing functions of this invention; and,
Fig. 12 shows the BER performance of a conventional DMT-based receiver, as well as the BER performance of a DMT receiver (N=64) comprising turbo-processing functions of this invention.

### Best Mode for Carrying Out the Invention

### (A) Overall Configuration of a Communication System of this Invention

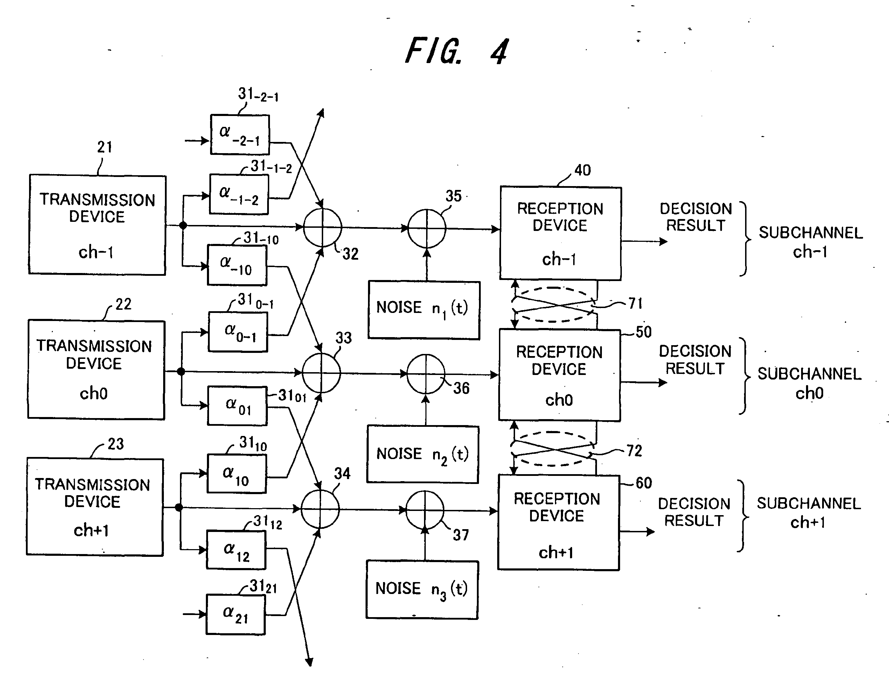

Fig. 4 shows the overall configuration of a communication system of this invention, in which interference between a subchannel of interest and the upper and lower two adjacent subchannels is utilized to demodulate data received in the subchannel of interest. The communication system comprises three transmission devices 21, 22, 23, which transmit data independently over three subchannels ch-1, ch0, ch+1, respectively; numerous crosstalk paths 31ᵢⱼ, having coupling coefficients αᵢⱼ from the ith subchannel to the jth subchannel; three reception devices 40, 50, 60, provided for each of the subchannels, which receive data from the corresponding subchannel and perform soft decisions of the received data; and means 71, 72 for input to other reception devices of the soft decision values of each of the reception devices. 32 through 34 and 35 through 37 are synthesis portions which synthesize ICI signals and noise.

The reception device 50 of subchannel ch0 utilizes soft decision values input from the reception devices 40, 60 of the lower and upper subchannels ch-1, ch+1 to adjust its own soft decision values, and based on these soft decision values, executes "0" and "1" decisions for received data. Similarly, other reception devices also use soft decision values input from the reception devices of lower and upper subchannels to adjust their own soft decision values, and based on these soft decision values, execute "0" and "1" judgments of received data.

### (B) Algorithm for Received Symbol Demodulation.

The algorithm used by the receiver of the subchannel of interest ch0 to demodulate received symbols in the communication system shown in Fig. 4 is explained.

The principle of the demodulation algorithm is derivation of the value lnD₀ indicating the difference between the posterior probability P(D₀=+1/y(t)) that an information symbol received in the subchannel of interest ch0 is "0" (=+1), and the posterior probability P(D₀=-1/y(t)) that the information symbol is "1" (=-1). This is because, if the difference in posterior probabilities lnD₀ can be derived, it is possible to decide whether the received information symbol is "0" or "1". That is, the probability difference lnD₀ for the subchannel of interest is the difference between the posterior probability P(D₀=+1/y(t)) that a received information symbol is "0" (=+1), and the posterior probability P(D₀=-1/y(t)) that the information symbol is "1" (=-1). Hence if lnD₀ > 0, the received information of the subchannel of interest can be decided as "0", and if lnD₀ < 0, the received information of the subchannel of interest can be decided as "1". From the above, in this invention, first the value lnD₀ indicating the difference in posterior probabilities is derived.

Suppose that binary information (two-valued information) is transmitted as signals S*ᵢⱼ(t) over two adjacent subchannels. The index i in S*ᵢⱼ(t) indicates the subchannel number (i=-1, 0, or 1), and the index j is determined by the sign of the information symbol Di in the subchannel i. That is, $\begin{matrix}i f D i = + 1 t h e n j = 0 \\ i f D i = - 1 t h e n j = 1\end{matrix}$

Hereafter, to simplify the notation, the time dependence of S*ᵢⱼ(t) is omitted from equations. That is, S*ᵢⱼ(t) shall be written simply as S*ᵢⱼ.

Suppose that the transmission symbols Di are statistically independent (have no correlation), and moreover are uniformly distributed random variables. From Fig. 4, signals in the subchannel of interest which have been affected by ICI from the lower and upper subchannels are represented by linear coupling due to crosstalk coefficients α between the signals S*₋₁ⱼ, S*₁ⱼ transmitted in the upper and lower subchannels, and the signals S*₀ⱼ in the channel of interest. Crosstalk coefficients α are values corresponding to crosstalk leakage. If the information symbol Do in the channel of interest is +1, the received signal Sⱼ (j=0-3) in the channel of interest is, according to whether the signals D₋₁, D₁ in the lower and upper subchannels are +1 or -1, equal to ${ \begin{matrix}{S}_{0} = {S}_{00}^{*} + {α}_{- 10} ⋅ {S}_{- 10}^{*} + {α}_{10} ⋅ {S}_{10}^{*} , & {D}_{0} = + 1 , {D}_{- 1} = + 1 , {D}_{1} = + 1 \\ {S}_{1} = {S}_{00}^{*} + {α}_{- 10} ⋅ {S}_{- 10}^{*} - {α}_{10} ⋅ {S}_{10}^{*} , & {D}_{0} = + 1 , {D}_{- 1} = + 1 , {D}_{1} = - 1 \\ {S}_{2} = {S}_{00}^{*} - {α}_{- 10} ⋅ {S}_{- 10}^{*} + {α}_{10} ⋅ {S}_{10}^{*} , & {D}_{0} = + 1 , {D}_{- 1} = - 1 , {D}_{1} = + 1 \\ {S}_{3} = {S}_{00}^{*} - {α}_{- 10} ⋅ {S}_{- 10}^{*} - {α}_{10} ⋅ {S}_{10}^{*} , & {D}_{0} = + 1 , {D}_{- 1} = - 1 , {D}_{1} = - 1\end{matrix}$

Here the j of the signal Sⱼ represents the signal number. Similarly, if an information symbol Do in the channel of interest is -1, then the received signal Sⱼ (j=4-7) in the channel of interest is, according to whether the signals D₋₁, D₁ in the lower and upper subchannels are +1 or -1, equal to ${ \begin{matrix}{S}_{4} = - {S}_{00}^{*} + {α}_{- 10} ⋅ {S}_{- 10}^{*} + {α}_{10} ⋅ {S}_{10}^{*} = - {S}_{3} , & {D}_{0} = - 1 , {D}_{- 1} = + 1 , {D}_{1} = + 1 \\ {S}_{5} = - {S}_{00}^{*} + {α}_{- 10} ⋅ {S}_{- 10}^{*} - {α}_{10} ⋅ {S}_{10}^{*} = - {S}_{2} , & {D}_{0} = - 1 , {D}_{- 1} = + 1 , {D}_{1} = - 1 \\ {S}_{6} = - {S}_{00}^{*} - {α}_{- 10} ⋅ {S}_{- 10}^{*} + {α}_{10} ⋅ {S}_{10}^{*} = - {S}_{1} , & {D}_{0} = - 1 , {D}_{- 1} = - 1 , {D}_{1} = + 1 \\ {S}_{7} = - {S}_{00}^{*} - {α}_{- 10} ⋅ {S}_{- 10}^{*} - {α}_{10} ⋅ {S}_{10}^{*} = - {S}_{0} , & {D}_{0} = - 1 , {D}_{- 1} = - 1 , {D}_{1} = - 1\end{matrix}$

After the introduction of ICI, Sⱼ (i=0,1,2,...,7) are used as eight signals input to the receivers for each subchannel, according to equations (2) and (3). The index j of Sⱼ in equations (2) and (3) indicates the signal number, and is determined by pairing symbols D₋₁, D₁, and Do in the lower subchannel, upper subchannel, and in the channel of interest.

By taking the following facts (1) and (2) into consideration, the algorithm for optimal reception can be further extended. That is, (1) the signs of certain information signals are opposite, so that S*₋₁₀=-S*₋₁₁, S*₀₀=-S*₀₁, and S*₁₀=-S*₁₁. Further, (2) the same signals are used in the lower and upper subchannels and in the subchannel of interest in order to transmit information symbols, with S*₋₁₀=S*₀₀=S*₁₀ and S*₋₁₁=S*₀₁=S*₁₁. By taking these facts into account, the algorithm for optimal reception can be further extended. The latter (2) indicates that values are the same for all subchannels, and moreover that there are no differences in amplitude, waveform, energy, or similar between the information symbols for all subchannels. In this case, the signals of equations (2) and (3) for each of the subchannels are paired as shown below, and moreover have opposite signs. ${ \begin{matrix}{S}_{0} = {S}_{00}^{*} + {α}_{- 10} ⋅ {S}_{- 10}^{*} + {α}_{10} ⋅ {S}_{10}^{*} = - {S}_{7} \\ {S}_{1} = {S}_{00}^{*} + {α}_{- 10} ⋅ {S}_{- 10}^{*} - {α}_{10} ⋅ {S}_{10}^{*} = - {S}_{6} \\ {S}_{2} = {S}_{00}^{*} - {α}_{- 10} ⋅ {S}_{- 10}^{*} + {α}_{10} ⋅ {S}_{10}^{*} = - {S}_{5} \\ {S}_{3} = {S}_{00}^{*} - {α}_{- 10} ⋅ {S}_{- 10}^{*} - {α}_{10} ⋅ {S}_{10}^{*} = - {S}_{0}\end{matrix}$

From equations (2), (3) and (4), the posterior probability of receiving the signal Sⱼ, or in other words, the posterior probability that the received signal is Sⱼ, P(Sⱼ/y(t)), is given by the equation $P \left[{S}_{j}/y\left(t\right)\right] = {k}_{0} ⋅ {P}_{a p r} \left({S}_{j}\right) ⋅ P \left(y\left(t\right)/{S}_{j}\right) = {k}_{0} ⋅ {P}_{a p r} \left({S}_{j}\right) ⋅ exp \left\{-\frac{1}{{N}_{0}}{\int }_{0}^{T}{\left[y\left(t\right)-{S}_{j}\right]}^{2}ⅆt\right\}$

Here k₀ is a normalization constant, j is the signal number (j=0,1,...,7), y(t) is the signal resultting from synthesis of the signal train Sⱼ accompanying ICI, and white Gaussian noise n(t) having a spectral power intensity No, y(t) = Sⱼ+n(t), Pₐₚᵣ(Sⱼ) is the prior probability of the received signal Sⱼ, and P(y(t)/Sⱼ) is the conditional probability, which is the probability that the code word sent is Sⱼ when the received word is y(t).

The prior probabilities Pₐₚᵣ(Sⱼ) (j=0 , 1, ... , 7) for the channel of interest are represented as the cross product of the prior probability that the signal in the channel of interest is S*₀₀ or is S*₀₁, and the posterior probabilities of the information signal S*ᵢⱼ in the two adjacent subchannels. That is, when D₀=+1, ${ \begin{matrix}{P}_{a p r} \left({S}_{0}\right) = P \left({S}_{- 10}^{*}\right) ⋅ {P}_{a p r} \left({S}_{00}^{*}\right) ⋅ P \left({S}_{10}^{*}\right) \\ {P}_{a p r} \left({S}_{1}\right) = P \left({S}_{- 10}^{*}\right) ⋅ {P}_{a p r} \left({S}_{00}^{*}\right) ⋅ P \left({S}_{11}^{*}\right) \\ {P}_{a p r} \left({S}_{2}\right) = P \left({S}_{- 11}^{*}\right) ⋅ {P}_{a p r} \left({S}_{00}^{*}\right) ⋅ P \left({S}_{10}^{*}\right) \\ {P}_{a p r} \left({S}_{3}\right) = P \left({S}_{- 11}^{*}\right) ⋅ {P}_{a p r} \left({S}_{00}^{*}\right) ⋅ P \left({S}_{11}^{*}\right)\end{matrix}$
and when D₀=-1, ${ \begin{matrix}{P}_{a p r} \left({S}_{4}\right) = P \left({S}_{- 10}^{*}\right) ⋅ {P}_{a p r} \left({S}_{01}^{*}\right) ⋅ P \left({S}_{10}^{*}\right) \\ {P}_{a p r} \left({S}_{5}\right) = P \left({S}_{- 10}^{*}\right) ⋅ {P}_{a p r} \left({S}_{01}^{*}\right) ⋅ P \left({S}_{11}^{*}\right) \\ {P}_{a p r} \left({S}_{6}\right) = P \left({S}_{- 11}^{*}\right) ⋅ {P}_{a p r} \left({S}_{01}^{*}\right) ⋅ P \left({S}_{10}^{*}\right) \\ {P}_{a p r} \left({S}_{7}\right) = P \left({S}_{- 11}^{*}\right) ⋅ {P}_{a p r} \left({S}_{01}^{*}\right) ⋅ P \left({S}_{11}^{*}\right)\end{matrix}$

In equations (6) and (7), Pₐₚᵣ(Sj) is the prior probability that the information signal Sⱼ with number j is transmitted in the subchannel of interest (transmission probability). The prior probability Pₐₚᵣ(S*ᵢⱼ) depends on the statistics of the data generation source, and in the most realistic case is assumed to be equal to 1/2. The probability P(S*ᵢⱼ) is the posterior probability of the received signal S*ᵢⱼ differing from the prior probability Pₐₚᵣ(S*ᵢⱼ), the probability P(S*ᵢⱼ) can be estimated with high reliability on the receiving side, and is expressed by P(S*ᵢⱼ)= P(S*ᵢⱼ/y(t)). This is the best estimate of P(S*ᵢⱼ) in a white Gaussian noise channel. From this assumption, equations (6) and (7) can be rewritten as follows. ${ \begin{matrix}{P}_{a p r} \left({S}_{0}\right) = P \left({S}_{- 10}^{*}/y\left(t\right)\right) ⋅ {P}_{a p r} \left({S}_{00}^{*}\right) ⋅ P \left({S}_{10}^{*}/y\left(t\right)\right) \\ {P}_{a p r} \left({S}_{1}\right) = P \left({S}_{- 10}^{*}/y\left(t\right)\right) ⋅ {P}_{a p r} \left({S}_{00}^{*}\right) ⋅ P \left({S}_{11}^{*}/y\left(t\right)\right) \\ {P}_{a p r} \left({S}_{2}\right) = P \left({S}_{- 11}^{*}/y\left(t\right)\right) ⋅ {P}_{a p r} \left({S}_{00}^{*}\right) ⋅ P \left({S}_{10}^{*}/y\left(t\right)\right) \\ {P}_{a p r} \left({S}_{3}\right) = P \left({S}_{- 11}^{*}/y\left(t\right)\right) ⋅ {P}_{a p r} \left({S}_{00}^{*}\right) ⋅ P \left({S}_{11}^{*}/y\left(t\right)\right)\end{matrix}$ ${ \begin{matrix}{P}_{a p r} \left({S}_{4}\right) = P \left({S}_{- 10}^{*}/y\left(t\right)\right) ⋅ {P}_{a p r} \left({S}_{01}^{*}\right) ⋅ P \left({S}_{10}^{*}/y\left(t\right)\right) \\ {P}_{a p r} \left({S}_{5}\right) = P \left({S}_{- 10}^{*}/y\left(t\right)\right) ⋅ {P}_{a p r} \left({S}_{01}^{*}\right) ⋅ P \left({S}_{11}^{*}/y\left(t\right)\right) \\ {P}_{a p r} \left({S}_{6}\right) = P \left({S}_{- 11}^{*}/y\left(t\right)\right) ⋅ {P}_{a p r} \left({S}_{01}^{*}\right) ⋅ P \left({S}_{10}^{*}/y\left(t\right)\right) \\ {P}_{a p r} \left({S}_{7}\right) = P \left({S}_{- 11}^{*}/y\left(t\right)\right) ⋅ {P}_{a p r} \left({S}_{01}^{*}\right) ⋅ P \left({S}_{11}^{*}/y\left(t\right)\right)\end{matrix}$

Or, when a direct relation exists between the information signal S*ᵢⱼ and the transmission information signal Dᵢ (see equation (1)), P(S*ᵢⱼ)=P(Dᵢ=j/y(t)) can be substituted into equations (6) and (7), so that equations (6) and (7) become as follows. Here P(S*ᵢⱼ) is the probability that the signal of the ith subchannel Dᵢ is j. ${ \begin{matrix}{P}_{a p r} \left({S}_{0}\right) = P \left({D}_{- 1}=+1/y\left(t\right)\right) ⋅ {P}_{a p r} \left({S}_{00}^{*}\right) ⋅ P \left({D}_{1}=+1/y\left(t\right)\right) \\ {P}_{a p r} \left({S}_{1}\right) = P \left({D}_{- 1}=+1/y\left(t\right)\right) ⋅ {P}_{a p r} \left({S}_{00}^{*}\right) ⋅ P \left({D}_{1}=-1/y\left(t\right)\right) \\ {P}_{a p r} \left({S}_{2}\right) = P \left({D}_{- 1}=-1/y\left(t\right)\right) ⋅ {P}_{a p r} \left({S}_{00}^{*}\right) ⋅ P \left({D}_{1}=+1/y\left(t\right)\right) \\ {P}_{a p r} \left({S}_{3}\right) = P \left({D}_{- 1}=-1/y\left(t\right)\right) ⋅ {P}_{a p r} \left({S}_{00}^{*}\right) ⋅ P \left({D}_{1}=-1/y\left(t\right)\right)\end{matrix}$ ${ \begin{matrix}{P}_{a p r} \left({S}_{4}\right) = P \left({D}_{- 1}=+1/y\left(t\right)\right) ⋅ {P}_{a p r} \left({S}_{01}^{*}\right) ⋅ P \left({D}_{1}=+1/y\left(t\right)\right) \\ {P}_{a p r} \left({S}_{5}\right) = P \left({D}_{- 1}=+1/y\left(t\right)\right) ⋅ {P}_{a p r} \left({S}_{01}^{*}\right) ⋅ P \left({D}_{1}=-1/y\left(t\right)\right) \\ {P}_{a p r} \left({S}_{6}\right) = P \left({D}_{- 1}=-1/y\left(t\right)\right) ⋅ {P}_{a p r} \left({S}_{01}^{*}\right) ⋅ P \left({D}_{1}=+1/y\left(t\right)\right) \\ {P}_{a p r} \left({S}_{7}\right) = P \left({D}_{- 1}=-1/y\left(t\right)\right) ⋅ {P}_{a p r} \left({S}_{01}^{*}\right) ⋅ P \left({D}_{1}=-1/y\left(t\right)\right)\end{matrix}$

In equations (10) and (11), the prior probabilities Pₐₚᵣ(Sⱼ) (j=0,1,2,...,7) are expressed as the channel cross-products of the transmission prior probabilities Pₐₚᵣ(S*ᵢⱼ) of the information signal S*ᵢⱼ, and the posterior probabilities that the information symbols Dᵢ received in the lower and upper adjacent subchannels are +1 or -1.

In a turbo-receiver (maximum-likelihood receiver) of this invention, the sign of a received information symbol D₀ in the subchannel of interest is decided as follows. The probability P(D₀=+1/y(t)) that a received information symbol D₀ in the subchannel of interest (number 0) is +1, and the probability P(D₀=-1/y(t)) that D₀ is -1, are each computed, and by comparing the magnitudes of the two, or by comparing the difference in the logarithms of each with a threshold, the sign of the received information symbol D₀ is decided.

The posterior probability P(D₀=j/y(t)) that a received information symbol D₀ in the subchannel of interest is j can be obtained as the posterior probability of receiving a symbol such that D₀ is j. Hence the posterior probability P(D₀=+1/y(t)) is the probability that a received information symbol Do in the subchannel of interest will be "0" (=+1), and can be computed as follows. From equations (1) and (2), signals transmitted as "0" (=+1) information symbols in the subchannel of interest are S₀ to S₃, so that the posterior probability P(D₀=+1/y(t)) that a received information symbol D₀ in the subchannel of interest will be "0" (=+1) will be the sum of the posterior probabilities of receiving the signals S₀ to S₃, and can be computed using equation (12a). Similarly, the posterior probability P(D₀=-1/y(t)) that a received information symbol Do in the subchannel of interest is "0" (=-1) can be computed from equation (12b).${ \begin{matrix}P ( {D}_{0} = + 1 / y \left(t\right) ) = k ⋅ [ P \left({S}_{0}/y\left(t\right)\right) + P \left({S}_{1}/y\left(t\right)\right) + P ( {S}_{2} / y \left(t\right) ) + P ( {S}_{3} / y \left(t\right) ) + ] \left(12a\right) \\ P ( {D}_{0} = - 1 / y \left(t\right) ) = k ⋅ [ P \left({S}_{4}/y\left(t\right)\right) + P \left({S}_{5}/y\left(t\right)\right) + P ( {S}_{6} / y \left(t\right) ) + P ( {S}_{7} / y \left(t\right) ) + ] \left(12b\right)\end{matrix}$

On applying equation (5) to (12a) (and taking k₀=1), equation (13) is obtained. $\begin{matrix}P ( {D}_{0} = + 1 / y \left(t\right) ) = \\ k ⋅ [ {P}_{a p r} \left({S}_{0}\right) ⋅ P \left(y\left(t\right)/{S}_{0}\right) + {P}_{a p r} \left({S}_{1}\right) ⋅ P \left(y\left(t\right)/{S}_{1}\right) + \\ k ⋅ \left[{P}_{a p r}\left({S}_{2}\right)⋅P\left(y\left(t\right)/{S}_{2}\right)+{P}_{a p r}\left({S}_{3}\right)⋅P\left(y\left(t\right)/{S}_{3}\right)\right]\end{matrix}$

And on applying equation (5) to (12b) (with k₀=1), equation (14) is obtained. $\begin{matrix}P ( {D}_{0} = - 1 / y \left(t\right) ) = \\ k ⋅ [ {P}_{a p r} \left({S}_{4}\right) ⋅ P \left(y\left(t\right)/{S}_{4}\right) + {P}_{a p r} \left({S}_{5}\right) ⋅ P \left(y\left(t\right)/{S}_{5}\right) + \\ k ⋅ \left[{P}_{a p r}\left({S}_{6}\right)⋅P\left(y\left(t\right)/{S}_{6}\right)+{P}_{a p r}\left({S}_{7}\right)⋅P\left(y\left(t\right)/{S}_{7}\right)\right]\end{matrix}$

Substituting equations (10) and (11) into (13) and (14) and simplifying, and omitting the y(t) of P(Dᵢ=±1/y(t)) (that is, if P(Dᵢ=±1/y(t)) - P(Dᵢ=±1)), then equations (15) and (16) are obtained. $P \left({D}_{0}=+1/y\left(t\right)\right) = k ⋅ \left[\begin{matrix}P \left({D}_{- 1}=+1\right) ⋅ {P}_{a p r} \left({S}_{00}^{*}\right) ⋅ P \left({D}_{1}=+1\right) ⋅ P \left(y\left(t\right)/{S}_{0}\right) + \\ P \left({D}_{- 1}=+1\right) ⋅ {P}_{a p r} \left({S}_{00}^{*}\right) ⋅ P \left({D}_{1}=-1\right) ⋅ P \left(y\left(t\right)/{S}_{1}\right) + \\ P \left({D}_{- 1}=-1\right) ⋅ {P}_{a p r} \left({S}_{00}^{*}\right) ⋅ P \left({D}_{1}=+1\right) ⋅ P \left(y\left(t\right)/{S}_{2}\right) + \\ P \left({D}_{- 1}=-1\right) ⋅ {P}_{a p r} \left({S}_{00}^{*}\right) ⋅ P \left({D}_{1}=-1\right) ⋅ P \left(y\left(t\right)/{S}_{3}\right)\end{matrix}\right]$ $P \left({D}_{0}=-1/y\left(t\right)\right) = k ⋅ \left[\begin{matrix}P \left({D}_{- 1}=+1\right) ⋅ {P}_{a p r} \left({S}_{01}^{*}\right) ⋅ P \left({D}_{1}=+1\right) ⋅ P \left(y\left(t\right)/{S}_{4}\right) + \\ P \left({D}_{- 1}=+1\right) ⋅ {P}_{a p r} \left({S}_{01}^{*}\right) ⋅ P \left({D}_{1}=-1\right) ⋅ P \left(y\left(t\right)/{S}_{5}\right) + \\ P \left({D}_{- 1}=-1\right) ⋅ {P}_{a p r} \left({S}_{01}^{*}\right) ⋅ P \left({D}_{1}=+1\right) ⋅ P \left(y\left(t\right)/{S}_{6}\right) + \\ P \left({D}_{- 1}=-1\right) ⋅ {P}_{a p r} \left({S}_{01}^{*}\right) ⋅ P \left({D}_{1}=-1\right) ⋅ P \left(y\left(t\right)/{S}_{7}\right)\end{matrix}\right]$

Equation (15) is then modified to obtain equations (17a) and (17b). $\begin{matrix}P ( {D}_{0} = + 1 / y \left(t\right) ) = \\ k ⋅ {P}_{a p r} \left({S}_{00}^{*}\right) ⋅ \left[P\left({D}_{- 1}=+1\right)⋅P\left({D}_{1}=+1\right)⋅P\left(y\left(t\right)/{S}_{0}\right)+P\left({D}_{- 1}=+1\right)⋅P\left({D}_{1}=-1\right)⋅P\left(y\left(t\right)/{S}_{1}\right)\right] + \\ k ⋅ {P}_{a p r} \left({S}_{00}^{*}\right) ⋅ \left[P\left({D}_{- 1}=-1\right)⋅P\left({D}_{1}=+1\right)⋅P\left(y\left(t\right)/{S}_{2}\right)+P\left({D}_{- 1}=-1\right)⋅P\left({D}_{1}=-1\right)⋅P\left(y\left(t\right)/{S}_{3}\right)\right]\end{matrix}$ $\begin{matrix}P ( {D}_{0} = + 1 / y \left(t\right) ) = \\ k ⋅ {P}_{a p r} \left({S}_{00}^{*}\right) ⋅ \left[P\left({D}_{- 1}=+1\right)⋅\left\{P\left({D}_{1}=+1\right)⋅P\left(y\left(t\right)/{S}_{0}\right)+P\left({D}_{1}=-1\right)⋅P\left(y\left(t\right)/{S}_{1}\right)\right\}\right] + \\ k ⋅ {P}_{a p r} \left({S}_{00}^{*}\right) ⋅ \left[P\left({D}_{- 1}=-1\right)⋅\left\{P\left({D}_{1}=+1\right)⋅P\left(y\left(t\right)/{S}_{2}\right)+P\left({D}_{1}=-1\right)⋅P\left(y\left(t\right)/{S}_{3}\right)\right\}\right]\end{matrix}$
Similarly, equation (16) is modified to obtain equations (18a) and (18b). $\begin{matrix}P ( {D}_{0} = - 1 / y \left(t\right) ) = \\ k ⋅ {P}_{a p r} \left({S}_{01}^{*}\right) ⋅ \left[P\left({D}_{- 1}=+1\right)⋅P\left({D}_{1}=+1\right)⋅P\left(y\left(t\right)/{S}_{4}\right)+P\left({D}_{- 1}=+1\right)⋅P\left({D}_{1}=-1\right)⋅P\left(y\left(t\right)/{S}_{5}\right)\right] + \\ k ⋅ {P}_{a p r} \left({S}_{00}^{*}\right) ⋅ \left[P\left({D}_{- 1}=-1\right)⋅P\left({D}_{1}=+1\right)⋅P\left(y\left(t\right)/{S}_{6}\right)+P\left({D}_{- 1}=-1\right)⋅P\left({D}_{1}=-1\right)⋅P\left(y\left(t\right)/{S}_{7}\right)\right]\end{matrix}$ $\begin{matrix}P ( {D}_{0} = - 1 / y \left(t\right) ) = \\ k ⋅ {P}_{a p r} \left({S}_{01}^{*}\right) ⋅ \left[P\left({D}_{- 1}=+1\right)⋅\left\{P\left({D}_{1}=+1\right)⋅P\left(y\left(t\right)/{S}_{4}\right)+P\left({D}_{1}=-1\right)⋅P\left(y\left(t\right)/{S}_{5}\right)\right\}\right] + \\ k ⋅ {P}_{a p r} \left({S}_{01}^{*}\right) ⋅ \left[P\left({D}_{- 1}=-1\right)⋅\left\{P\left({D}_{1}=+1\right)⋅P\left(y\left(t\right)/{S}_{6}\right)+P\left({D}_{1}=-1\right)⋅P\left(y\left(t\right)/{S}_{7}\right)\right\}\right]\end{matrix}$

From the above, if the posterior probabilities P(D₀=+1/y(t)) and P(D₀=-1/y(t)) with which a received information symbol Do in the subchannel of interest is "0" (=+1) and "1" (=-1) are computed, then by comparing the magnitudes, or by comparing the difference of their logarithms with a threshold value, the signal (+1 or -1) of the received information symbol can be decided.

Whether the information symbol D₁₀ of the subchannel of interest is +1 or -1 is judged by first computing $\frac{P \left({D}_{0}=+1/y\left(t\right)\right)}{P \left({D}_{0}=-1/y\left(t\right)\right)}$
and then using equations (19a) and (19b) to make a judgment. That is, if $\frac{P \left({D}_{0}=+1/y\left(t\right)\right)}{P \left({D}_{0}=-1/y\left(t\right)\right)}$
then it is judged that D₀=+1, and if $\frac{P \left({D}_{0}=+1/y\left(t\right)\right)}{P \left({D}_{0}=-1/y\left(t\right)\right)}$
then it is judged that D₀=-1.

Whether the information symbol D₁₀ of the subchannel of interest is +1 or -1 is judged by first computing $l n P \left({D}_{0}=+1/y\left(t\right)\right) - l n P \left({D}_{0}=-1/y\left(t\right)\right)$
(where ln is the base-e logarithm), and then making a judgment according to the sign. That is, if $l n P \left({D}_{0}=+1/y\left(t\right)\right) - l n P \left({D}_{0}=-1/y\left(t\right)\right) > 0$
then it is judged that D₀=+1, and if $l n P \left({D}_{0}=+1/y\left(t\right)\right) - l n P \left({D}_{0}=-1/y\left(t\right)\right) < 0$
then it is judged that D₀=-1.

Because transmission symbols D₀ are statistically independent (have no correlation) and are uniformly distributed random variables, the following equation obtains. ${ \begin{matrix}{P}_{a p r} \left({S}_{- 10}^{*}\right) = {P}_{a p r} \left({S}_{00}^{*}\right) = {P}_{a p r} \left({S}_{+ 10}^{*}\right) = 1 / 2 \\ {P}_{a p r} \left({S}_{- 11}^{*}\right) = {P}_{a p r} \left({S}_{01}^{*}\right) = {P}_{a p r} \left({S}_{+ 11}^{*}\right) = 1 / 2\end{matrix}$

From equation (20), and because the common multiplier in equations (17b) and (18b) does not affect the judgment rule, equations (17b) and (18b) can be rewritten as equations (21) and (22). $\begin{matrix}P \left({D}_{0}=+1/y\left(t\right)\right) = \\ P \left({D}_{- 1}=+1\right) ⋅ \left\{P\left({D}_{1}=+1\right)⋅P\left(y\left(t\right)/{S}_{0}\right)+P\left({D}_{1}=-1\right)⋅P\left(y\left(t\right)/{S}_{1}\right)\right\} + \\ P \left({D}_{- 1}=-1\right) ⋅ \left\{P\left({D}_{1}=+1\right)⋅P\left(y\left(t\right)/{S}_{2}\right)+P\left({D}_{1}=-1\right)⋅P\left(y\left(t\right)/{S}_{3}\right)\right\}\end{matrix}$ $\begin{matrix}P \left({D}_{0}=-1/y\left(t\right)\right) = \\ P \left({D}_{- 1}=+1\right) ⋅ \left\{P\left({D}_{1}=+1\right)⋅P\left(y\left(t\right)/{S}_{4}\right)+P\left({D}_{1}=-1\right)⋅P\left(y\left(t\right)/{S}_{5}\right)\right\} + \\ P \left({D}_{- 1}=-1\right) ⋅ \left\{P\left({D}_{1}=+1\right)⋅P\left(y\left(t\right)/{S}_{6}\right)+P\left({D}_{1}=-1\right)⋅P\left(y\left(t\right)/{S}_{7}\right)\right\}\end{matrix}$

Considering the algebraic identity of the following equation, $l n \left({e}^{X}+{e}^{Y}\right) = \frac{X + Y}{2} + l n 2 + l n ⁢ cosh \left(\frac{X - Y}{2}\right)$
the equations (21), (22) can be modified to obtain the following equations (23) and (24). $\begin{matrix}l n P \left({D}_{0}=+1/y\left(t\right)\right) = \\ 1 / 2 ⋅ l n P \left({D}_{- 1}=+1\right) + 1 / 2 ⋅ l n \left\{P\left({D}_{1}=+1\right)⋅P\left(y\left(t\right)/{S}_{0}\right)+P\left({D}_{1}=-1\right)⋅P\left(y\left(t\right)/{S}_{1}\right)\right\} + \\ 1 / 2 ⋅ l n P \left({D}_{- 1}=-1\right) + 1 / 2 ⋅ l n \left\{P\left({D}_{1}=+1\right)⋅P\left(y\left(t\right)/{S}_{2}\right)+P\left({D}_{1}=-1\right)⋅P\left(y\left(t\right)/{S}_{3}\right)\right\} + l n 2 + \\ l n ⁢ cosh \left\{\begin{matrix}1 / 2 ⋅ l n P \left({D}_{- 1}=+1\right) + 1 / 2 ⋅ l n { P \left({D}_{1}=+1\right) ⋅ P \left(y\left(t\right)/{S}_{0}\right) + P \left({D}_{1}=-1\right) ⋅ P \left(y\left(t\right)/{S}_{1}\right) } - \\ 1 / 2 ⋅ l n P \left({D}_{- 1}=-1\right) + 1 / 2 ⋅ l n \left\{P\left({D}_{1}=+1\right)⋅P\left(y\left(t\right)/{S}_{2}\right)+P\left({D}_{1}=+1\right)⋅P\left(y\left(t\right)/{S}_{3}\right)\right\}\end{matrix}\right\}\end{matrix}$ $\begin{matrix}l n P \left({D}_{0}=-1/y\left(t\right)\right) = \\ 1 / 2 ⋅ l n P \left({D}_{- 1}=+1\right) + 1 / 2 ⋅ l n \left\{P\left({D}_{1}=+1\right)⋅P\left(y\left(t\right)/{S}_{4}\right)+P\left({D}_{1}=-1\right)⋅P\left(y\left(t\right)/{S}_{5}\right)\right\} + \\ 1 / 2 ⋅ l n P \left({D}_{- 1}=-1\right) + 1 / 2 ⋅ l n \left\{P\left({D}_{1}=+1\right)⋅P\left(y\left(t\right)/{S}_{6}\right)+P\left({D}_{1}=-1\right)⋅P\left(y\left(t\right)/{S}_{7}\right)\right\} + l n 2 + \\ l n ⁢ cosh \left\{\begin{matrix}1 / 2 ⋅ l n P \left({D}_{- 1}=+1\right) + 1 / 2 ⋅ l n { P \left({D}_{1}=+1\right) ⋅ P \left(y\left(t\right)/{S}_{4}\right) + P \left({D}_{1}=-1\right) ⋅ P \left(y\left(t\right)/{S}_{5}\right) } - \\ 1 / 2 ⋅ l n P \left({D}_{- 1}=-1\right) + 1 / 2 ⋅ l n \left\{P\left({D}_{1}=+1\right)⋅P\left(y\left(t\right)/{S}_{6}\right)+P\left({D}_{1}=+1\right)⋅P\left(y\left(t\right)/{S}_{7}\right)\right\}\end{matrix}\right\}\end{matrix}$

Here, by employing the following equations (25) and (26), $l n P \left({D}_{0}=+1/y\left(t\right)\right) = \frac{A + B}{2} + l n 2 + l n ⁢ cosh \left(\frac{A - B}{2}\right)$ $l n P \left({D}_{0}=-1/y\left(t\right)\right) = \frac{C + D}{2} + l n 2 + l n ⁢ cosh \left(\frac{C - D}{2}\right)$

A, B, C, and D then become as follows. $\begin{matrix}A = l n P \left({D}_{- 1}=+1\right) + l n \left\{P\left({D}_{1}=+1\right)⋅P\left(y\left(t\right)/{S}_{0}\right)+P\left({D}_{1}=-1\right)⋅P\left(y\left(t\right)/{S}_{1}\right)\right\} \\ B = l n P \left({D}_{- 1}=-1\right) + l n \left\{P\left({D}_{1}=+1\right)⋅P\left(y\left(t\right)/{S}_{2}\right)+P\left({D}_{1}=-1\right)⋅P\left(y\left(t\right)/{S}_{3}\right)\right\} \\ C = l n P \left({D}_{- 1}=+1\right) + l n \left\{P\left({D}_{1}=+1\right)⋅P\left(y\left(t\right)/{S}_{4}\right)+P\left({D}_{1}=-1\right)⋅P\left(y\left(t\right)/{S}_{5}\right)\right\} \\ D = l n P \left({D}_{- 1}=-1\right) + l n \left\{P\left({D}_{1}=+1\right)⋅P\left(y\left(t\right)/{S}_{6}\right)+P\left({D}_{1}=-1\right)⋅P\left(y\left(t\right)/{S}_{7}\right)\right\}\end{matrix}$

Applying equations (25) and (26) to the judgment expressions on the left-hand sides of equations (19a) and (19b), the new judgment equation $l n {D}_{0} = \frac{A + B}{2} - \frac{C + D}{2} + l n ⁢ cosh \left(\frac{A - B}{2}\right) - l n ⁢ cosh \left(\frac{C - D}{2}\right) > / < 0$
is obtained. By taking into consideration the relation obtained from equation (5), $P ( y \left(t\right) / {S}_{j} = exp \left\{-\frac{1}{{N}_{0}}{\int }_{0}^{T}{\left[y\left(t\right)-{S}_{j}\right]}^{2}ⅆt\right\}$
as well as equation (4), each of the terms of the new judgment equation (27) can be rewritten as follows. Here, lnDᵢ = lnP(Dᵢ=+1)-LnP(Dᵢ=-1). $\begin{matrix}\left(A+B\right) - \left(C+D\right) = \\ \frac{2}{{N}_{0}} [ {\int }_{0}^{T} y \left(t\right) ⋅ {S}_{0} \left(t\right) ⅆ t + {\int }_{0}^{T} y \left(t\right) ⋅ {S}_{1} \left(t\right) ⅆ t + {\int }_{0}^{T} y \left(t\right) ⋅ {S}_{2} \left(t\right) ⅆ t + {\int }_{0}^{T} y \left(t\right) ⋅ {S}_{3} \left(t\right) ⅆ t ] + \\ l n ⁢ cosh \left\{1/2⋅\left\{ln{D}_{1}+\frac{2}{{N}_{0}}\left[{\int }_{0}^{T}y\left(t\right)⋅{S}_{0}\left(t\right)ⅆt-{\int }_{0}^{T}y\left(t\right)⋅{S}_{1}\left(t\right)ⅆt\right]-\frac{{E}_{0} - {E}_{1}}{{N}_{0}}\right\}\right\} - \\ l n ⁢ cosh \left\{1/2⋅\left\{ln{D}_{1}+\frac{2}{{N}_{0}}\left[{\int }_{0}^{T}y\left(t\right)⋅{S}_{0}\left(t\right)ⅆt-{\int }_{0}^{T}y\left(t\right)⋅{S}_{1}\left(t\right)ⅆt\right]+\frac{{E}_{0} - {E}_{1}}{{N}_{0}}\right\}\right\} + \\ l n ⁢ cosh \left\{1/2⋅\left\{ln{D}_{1}+\frac{2}{{N}_{0}}\left[{\int }_{0}^{T}y\left(t\right)⋅{S}_{2}\left(t\right)ⅆt-{\int }_{0}^{T}y\left(t\right)⋅{S}_{3}\left(t\right)ⅆt\right]-\frac{{E}_{2} - {E}_{3}}{{N}_{0}}\right\}\right\} - \\ l n ⁢ cosh \left\{1/2⋅\left\{ln{D}_{1}+\frac{2}{{N}_{0}}\left[{\int }_{0}^{T}y\left(t\right)⋅{S}_{2}\left(t\right)ⅆt-{\int }_{0}^{T}y\left(t\right)⋅{S}_{3}\left(t\right)ⅆt\right]+\frac{{E}_{2} - {E}_{3}}{{N}_{0}}\right\}\right\}\end{matrix}$

In the above, lnDᵢ=lnP(Dᵢ=+1/y(t))-lnP(Dᵢ=-1/y(t)) is the difference between the logarithms of the posterior probabilities that the signal Dᵢ transmitted in the ith subchannel is +1 and -1 (soft decision value for the ith subchannel). Further, suppose that the energy Eⱼ of the signal Sⱼ(t) is ${E}_{j} = {\int }_{0}^{T} {S}_{j}^{2} \left(t\right) ⅆ t$

Also, (A-B) and (C-D) in equation (27) are as follows. $\begin{matrix}\left(A-B\right) = \\ l n {D}_{- 1} + 1 / 2 ⋅ \left\{\frac{2}{{N}_{0}}\left[{\int }_{0}^{T}y\left(t\right)⋅{S}_{0}\left(t\right)ⅆt+{\int }_{0}^{T}y\left(t\right)⋅{S}_{1}\left(t\right)ⅆt-{\int }_{0}^{T}y\left(t\right)⋅{S}_{2}\left(t\right)ⅆt-{\int }_{0}^{T}y\left(t\right)⋅{S}_{3}\left(t\right)ⅆt\right]-\frac{Δ {E}_{Σ}}{{N}_{0}}\right\} + \\ l n ⁢ cosh \left\{1/2⋅\left\{ln{D}_{1}+\frac{2}{{N}_{0}}\left[{\int }_{0}^{T}y\left(t\right)⋅{S}_{0}\left(t\right)ⅆt-{\int }_{0}^{T}y\left(t\right)⋅{S}_{1}\left(t\right)ⅆt\right]-\frac{{E}_{0} - {E}_{1}}{{N}_{0}}\right\}\right\} - \\ l n ⁢ cosh \left\{1/2⋅\left\{ln{D}_{1}+\frac{2}{{N}_{0}}\left[{\int }_{0}^{T}y\left(t\right)⋅{S}_{2}\left(t\right)ⅆt-{\int }_{0}^{T}y\left(t\right)⋅{S}_{3}\left(t\right)ⅆt\right]+\frac{{E}_{2} - {E}_{3}}{{N}_{0}}\right\}\right\}\end{matrix}$ $\begin{matrix}\left(C-D\right) = \\ l n {D}_{- 1} + 1 / 2 ⋅ \left\{\frac{2}{{N}_{0}}\left[{\int }_{0}^{T}y\left(t\right)⋅{S}_{0}\left(t\right)ⅆt+{\int }_{0}^{T}y\left(t\right)⋅{S}_{1}\left(t\right)ⅆt-{\int }_{0}^{T}y\left(t\right)⋅{S}_{2}\left(t\right)ⅆt-{\int }_{0}^{T}y\left(t\right)⋅{S}_{3}\left(t\right)ⅆt\right]-\frac{Δ {E}_{Σ}}{{N}_{0}}\right\} + \\ l n ⁢ cosh \left\{1/2⋅\left\{ln{D}_{1}+\frac{2}{{N}_{0}}\left[{\int }_{0}^{T}y\left(t\right)⋅{S}_{2}\left(t\right)ⅆt-{\int }_{0}^{T}y\left(t\right)⋅{S}_{3}\left(t\right)ⅆt\right]+\frac{{E}_{2} - {E}_{3}}{{N}_{0}}\right\}\right\} - \\ l n ⁢ cosh \left\{1/2⋅\left\{ln{D}_{1}+\frac{2}{{N}_{0}}\left[{\int }_{0}^{T}y\left(t\right)⋅{S}_{0}\left(t\right)ⅆt-{\int }_{0}^{T}y\left(t\right)⋅{S}_{1}\left(t\right)ⅆt\right]+\frac{{E}_{0} - {E}_{1}}{{N}_{0}}\right\}\right\}\end{matrix}$

Here $Δ {E}_{Σ} = \frac{\left({E}_{0}+{E}_{1}\right) = \left({E}_{2}+{E}_{3}\right)}{{N}_{0}}$

Equations (27) through (30) define the optimum receiver structure for binary signals accompanying ICI. As is seen from equations (27) through (30), when judging the sign of an information symbol D transmitted in a certain subchannel, the judgment information of the adjacent channels is used. In the judgment rules of equations (27) through (30), lnd₋₁ and lnD₊₁ represent the difference in logarithms of the posterior probabilities that the information symbol is +1 in the lower subchannel (ch-1) and in the upper subchannel (ch+1), respectively. All calculations are serial calculations, so that during data processing for the subchannel of interest, the most recent posterior probabilities from adjacent subchannels obtained through repeated calculations can be used.

Thus an algorithm is created in which lnD₀, which is the soft decision value, is computed using equations (27) through (30), and thereafter the sign of the soft decision value lnD₀ is used to judge whether the received symbol in the subchannel of interest is "0" or "1".

### (C) Configuration of a Receiver Device of this Invention

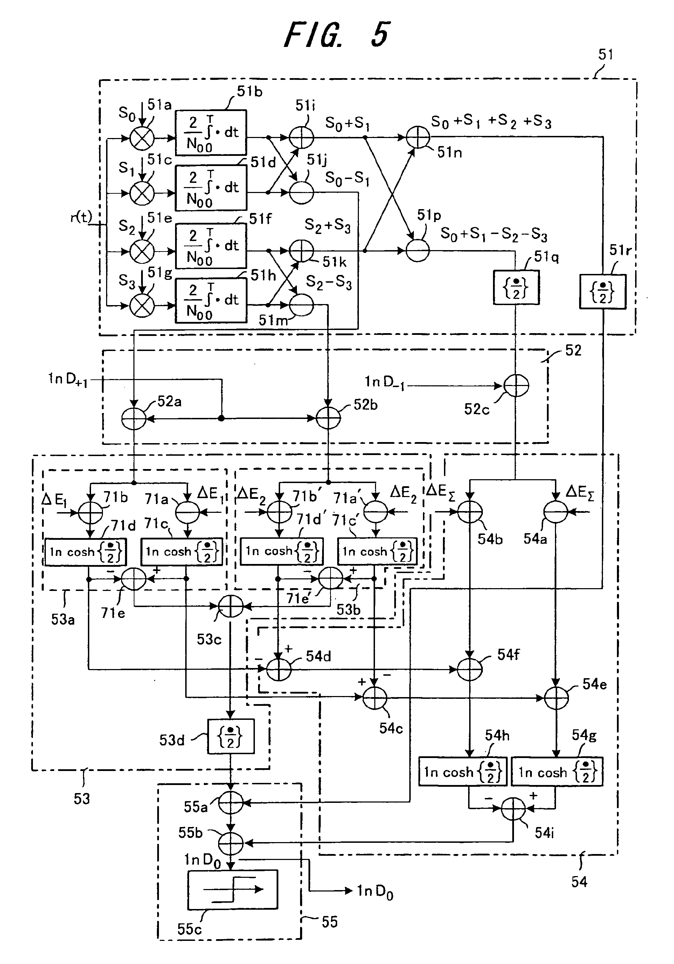

Fig. 5 shows the reception of a reception device, that is, a reception device based on maximum posterior probabilities using ICI (called a turbo-receiver), and shows the configuration of only the reception portion for the subchannel of interest; the reception portions for other subchannels have the same configuration. This reception portion comprises a configuration for execution of the above-described algorithm.

Broadly, the reception device 50 for the subchannel of interest comprises a correlation unit (which may be a matched filter) 51, an other-channel judgment result application portion 52, first and second nonlinear units 53 and 54, and a symbol judgment portion 55.

The multiplier 51a and integrator 51b of the correlation unit 51 are portions which compute the quantity $\frac{2}{{N}_{0}} {\int }_{0}^{T} y \left(t\right) ⋅ {S}_{0} \left(t\right) ⅆ t$
in equations (28) through (30); the multiplier 51c and integrator 51d are portions which compute the quantity $\frac{2}{{N}_{0}} {\int }_{0}^{T} y \left(t\right) ⋅ {S}_{1} \left(t\right) ⅆ t$
the multiplier 51e and integrator 51f are portions which compute the quantity $\frac{2}{{N}_{0}} {\int }_{0}^{T} y \left(t\right) ⋅ {S}_{2} \left(t\right) ⅆ t$
and the multiplier 51g and integrator 51h are portions which compute the quantity $\frac{2}{{N}_{0}} {\int }_{0}^{T} y \left(t\right) ⋅ {S}_{3} \left(t\right) ⅆ t$

The addition portion 51i adds the integration outputs of the integrators 51b and 51d, the subtraction portion 51j subtracts the integration outputs of the integrators 51b and 51d, the addition portion 51k adds the integration outputs of the integrators 51f and 51h, and the subtraction portion 51m subtracts the integration outputs of the integrators 51f, 51h. The addition portion 51n adds the outputs of the addition portions 51i and 51k and outputs the first term on the right side of equation (28), $\frac{2}{{N}_{0}} {\int }_{0}^{T} y \left(t\right) ⋅ {S}_{0} \left(t\right) ⅆ t + \frac{2}{{N}_{0}} {\int }_{0}^{T} y \left(t\right) {S}_{1} \left(t\right) ⅆ t + \frac{2}{{N}_{0}} {\int }_{0}^{T} y \left(t\right) {S}_{2} \left(t\right) ⅆ t + \frac{2}{{N}_{0}} {\int }_{0}^{T} y \left(t\right) {S}_{3} \left(t)\right) ⅆ t$

The subtraction portion 51p subtracts the outputs of the subtraction portions 51i and 51k and outputs $\frac{2}{{N}_{0}} {\int }_{0}^{T} y \left(t\right) ⋅ {S}_{0} \left(t\right) ⅆ t + \frac{2}{{N}_{0}} {\int }_{0}^{T} y \left(t\right) {S}_{1} \left(t\right) ⅆ t - \frac{2}{{N}_{0}} {\int }_{0}^{T} y \left(t\right) {S}_{2} \left(t\right) ⅆ t - \frac{2}{{N}_{0}} {\int }_{0}^{T} y \left(t\right) {S}_{3} \left(t)\right) ⅆ t$

The division portions 51q and 51r divide the input signals by two and output the results.

The other-channel judgment result application portion 52 comprises adders 52a to 52c, which respectively compute the quantities $l n {D}_{+ 1} + \frac{2}{{N}_{0}} {\int }_{0}^{T} y \left(t\right) ⋅ {S}_{0} \left(t\right) ⅆ t - \frac{2}{{N}_{0}} {\int }_{0}^{T} y \left(t\right) {S}_{1} \left(t\right) ⅆ t ,$ $l n {D}_{+ 1} + \frac{2}{{N}_{0}} {\int }_{0}^{T} y \left(t\right) ⋅ {S}_{2} \left(t\right) ⅆ t - \frac{2}{{N}_{0}} {\int }_{0}^{T} y \left(t\right) {S}_{3} \left(t\right) ⅆ t ,$ $l n {D}_{- 1} + \frac{2}{{N}_{0}} {\int }_{0}^{T} y \left(t\right) ⋅ {S}_{0} \left(t\right) ⅆ t + \frac{2}{{N}_{0}} {\int }_{0}^{T} y \left(t\right) {S}_{1} \left(t\right) ⅆ t - \frac{2}{{N}_{0}} {\int }_{0}^{T} y \left(t\right) {S}_{2} \left(t\right) ⅆ t - \frac{2}{{N}_{0}} {\int }_{0}^{T} y \left(t\right) {S}_{3} \left(t\right) ⅆ t$

The first nonlinear unit 53 is a portion which performs the computation of In cosh in the second through fifth terms on the right side of equation (28), and has first and second nonlinear portions 53a and 53b. The addition portions 71a, 71b of the first nonlinear portion 53a respectively compute the contents of the square brackets ([]) in the first and second terms on the right of equation (28); here (E₀-E₁)/N₀ = ΔE₁. The In cosh computation portions 71c, 71d respectively compute the second and third terms on the right in equation (28), and the subtractor 71e subtracts the computation result of the In cosh computation portion 71d from the computation result of the In cosh computation portion 71c and outputs the result.

The addition portions 71a', 71b' of the second nonlinear portion 53b respectively compute the contents of the curly brackets ({ }) in the fourth and fifth terms on the right in equation (28); here, (E₂-E₃)/N₀ = ΔE₂. The ln cosh computation portions 71c', 71d' respectively compute the fourth and fifth terms on the right in equation (28), and the subtractor 71e' subtracts the computation result of the In cosh computation portion 71d' from the computation result of the In cosh computation portion 71c', and outputs the result.

The addition portion 53c synthesizes the outputs of the adders 71e, 71e', and the division portion 53d divides the synthesized signal by 2 and outputs the result of computation of the second through fifth terms on the right in equation (28).

The second nonlinear unit 54 is a portion which computes the first through third terms on the right in equations (29) and (30). The addition portions 54a, 54b respectively compute the first term on the right in equations (29) and (30), the addition portions 54c, 54d respectively compute the second and third terms on the right in equations (29) and (30), the addition portions 54e, 54f respectively compute the right-hand side of equations (29) and (30), the In cosh computation portions 54g, 54h compute the quantities $l n ⁢ cosh \frac{A - B}{2} , l n ⁢ cosh \frac{C - D}{2}$
and the subtraction portion 54i computes the difference of the outputs of the In cosh computation portions 54g, 54h, $l n ⁢ cosh \frac{A - B}{2} - l n ⁢ cosh \frac{C - D}{2}$
and outputs the result.

The adder 55a of the symbol judgment portion 55 adds the output signal of the division portion 51r of the correlation unit 51 and the output signal of the nonlinear unit 53, and outputs $\frac{A - B}{2} - \frac{C - D}{2}$
and the addition portion 55b generates the lnD₀ (soft decision value) of equation (27). The judgment portion 55c judges the sign of lnD₀, and if positive decides that the received symbol is "0", but if negative decides that the symbol is "1". The symbol judgment portion 55 also feeds back the computation result of equation (27) for (the soft decision value) lnD₀ to the other-channel judgment result application portions of the reception portions 40, 60 of the lower and upper adjacent subchannels.

### (D) Similarity to a Turbo-Decoder

The above-described received data demodulation algorithm of this invention is similar to a turbo-decoder for turbo codes, described in M.C. Valeniti and B.D. Woerner, "Variable latency turbo codes for wireless multimedia applications", Proc. Int. Symposium on Turbo codes and Related Topics, Brest, France, Sept. 1997, pp. 216-219.

Due to similarity with turbo-decoder, the algorithm of this invention is called a turbo-receiver. In a turbo-decoder, each decoder passes information to other decoders, and uses information obtained from other decoders to refine posterior probabilities, estimated in order. Similarly, in the algorithm of this invention, information obtained from one subchannel is subjected to nonlinear processing, and is then used to refine the posterior probabilities estimated for other channels; again similarly, information obtained from these other subchannels is used to refine the posterior probabilities estimated for the one subchannel. If in the turbo-decoder the individual decoder outputs are in hard bit decision (hard decision) format, then sharing of information holds only very slight benefits. Hard bit decisions are similar to the decision feedback equalizer previously proposed in Viterbo and K. Fazel, "How to combat long echoes in QFDM transmission schemes: Subchannel equalization or more powerful channel coding", Proc. IEEE Globecom '95, Singapore, Nov. 1995, pp. 2069-2074, for ICI cancellation. However, a turbo-decoder output is in soft decision format. Similarly, the outputs lnd₋₁, lnD₀, lnD₁ of the reception devices 40 to 60 for subchannels in this invention are soft decision format values (soft decision values), and hard decisions are made after the end of repeated calculations.

These structural similarities are for the following reasons. In a turbo-receiver, similarly to the case of turbo codes, the existence of ICI means there is transmission over subchannels in which the same information has uncorrelated noise. Depending on the behavior of this uncorrelated noise, estimates of posterior probabilities (or the reliability of decisions) can be improved by using the estimated posterior probabilities derived from other subchannels.

Similarly to a repeating turbo-decoder, the algorithm of this invention is repeated one or more times for received information prior to the final decision. When the initial step, that is, using decisions from other subchannels is not possible, if the data is uniformly distributed random variables, it is possible to set P(D₋₁=+1/y(t)) - P(D₋₁=1/y(t)) = 1/2 and P(D₁=+1/y(t)) = P(D₁=-1/y(t)) = 1/2 for the first subchannel. This setting is the best setting. Consequently in the first step, the difference lnD₋₁ in posterior probabilities in the lower subchannel ch-1 is supposed to be zero. By similarly considering the upper subchannel, setting P(D₁=+1/y(t)) = 1/2, P(D₁=-1/y(t)) = 1/2, the difference lnD₁ in posterior probabilities is again zero. By computing equations (27) to (30) with lnD₋₁ = lnD₁ = 0, an initial estimate can be obtained for InD₀, which had been unknown. Similarly, by means of the algorithm of this invention during the initial iteration in a communication system with N subchannels, for the lower subchannel it is assumed that lnD₋₂ = lnD₀ = 0 to compute lnd₋₁, and for the upper subchannel it is assumed that lnD₂ = lnD₀ = 0 to compute lnD₁. In the second step, the lnD₋₁, lnD₁ obtained in the preceding step are applied to the decision equations (27) to (30) to compute new estimated values of posterior probabilities for the subchannel of interest. By this means, the output of one subchannel receiver can be used as a prior probability in other receivers.

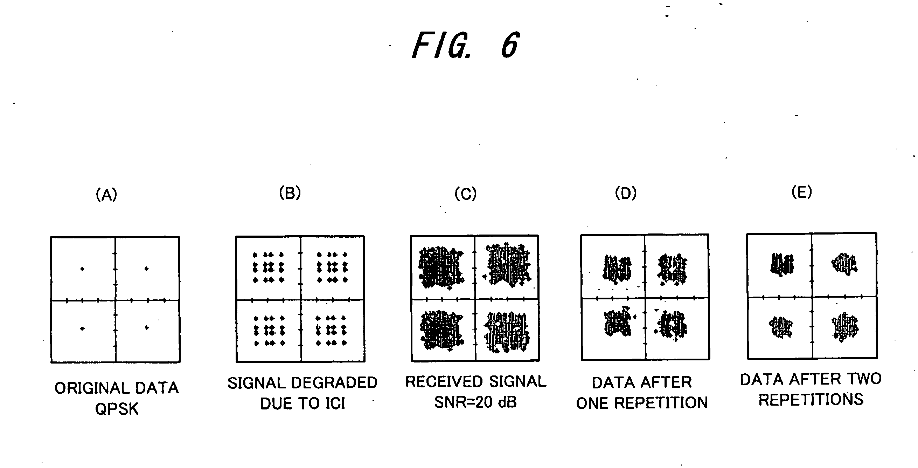

Fig. 6 is an explanatory diagram of the constellation of the subchannel of interest in an N=64 communication system, for a case in which QPSK modulation is performed with an S/N ratio of 20 dB after different numbers of repetitions. Cross-channel leakage coefficients are assumed to be α₀₋₁=0.25, α₀₁=0.15. The constellations shown are for (A) the original QPSK modulated data; (B) the signal after degradation by ICI; (C) the signal received with an S/N of 20 dB; (D) the data received after one repetition of the algorithm of this invention; and (E) the data received after two repetitions of the algorithm of this invention.

From this it is concluded that by means of the present invention, constellation scattering is reduced and the BER is improved to a smaller value. Also, the greater the number of repetitions, the smaller still the constellation scattering can be made, and the BER is improved still further.

### (E) Nonlinear Units

In Fig. 5, the energy difference ΔE₁ between the signals S₀(t) and S₁(t) and the energy difference ΔE₂ between the signals S₂(t) and S₃(t), normalized by the spectral power intensity N₀ of white Gaussian noise, as well as the ΔXΞ of equation (31) are introduced to realize a receiver device. ΔE₁ is the difference between the energy when the information symbols D₋₁, D₀, D₁ of the respective channels ch-1, ch0, ch1 are "+1,+1,+1" (energy of signal S₁(t)) and the energy when they are "+1,+1,-1" (energy of signal S₁(t)).

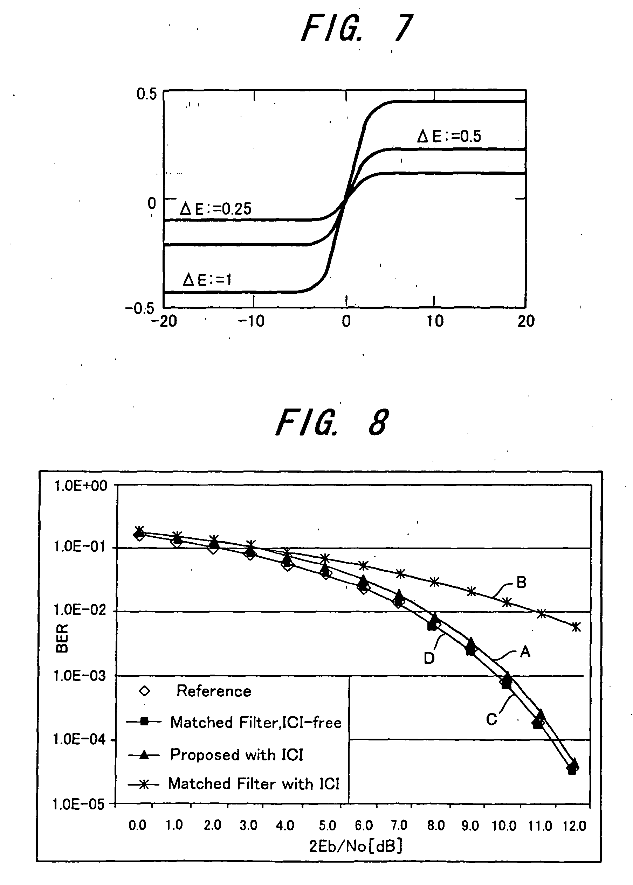

The nonlinear units 53a, 53b, 54 of Fig. 5 can be represented as limiters having a nonlinear transfer function shown in Fig. 7.

In other words, the nonlinear units 53a, 53b, 54 have negative amplitude limits for negative input and positive amplitude limits for positive input, and moreover can be approximated by a limiter having a substantially linear input-output relation on both sides of zero input. The limit level depends on the S/N ratio and on the energy differences ΔE₁, ΔE₂, ΔEΞ. Fig. 7 shows transfer functions of a nonlinear unit taking ΔE as a parameter.

By approximating nonlinear units by a limiter having a characteristic shown in Fig. 7, the configuration is made simple, and the nonlinear unit computations are facilitated.

### (F) Noise Immunity and Simulation Results

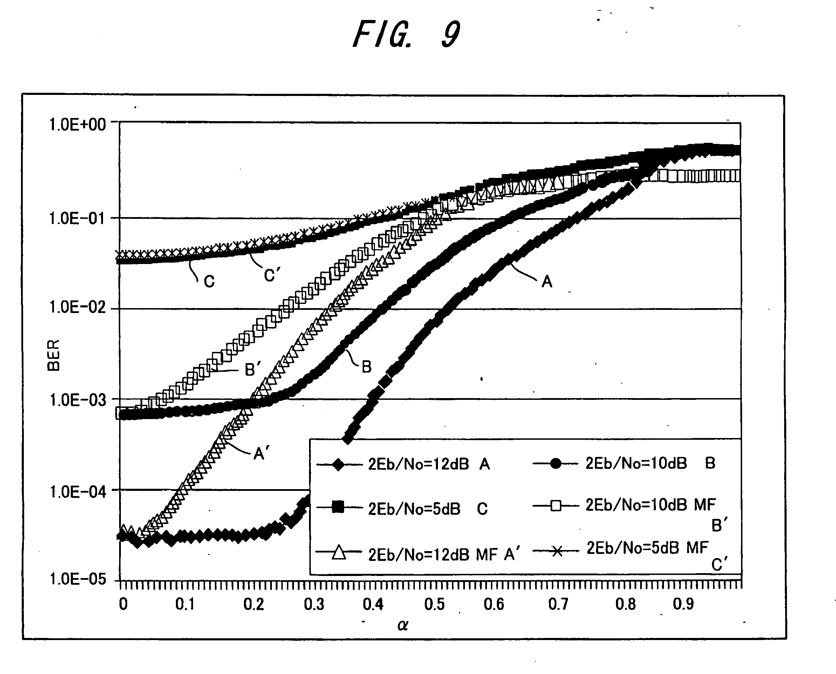

In order to verify the validity of the nonlinear signal processing of this invention, computer simulations of a receiver of this invention and of a classical matched-filter receiver were performed. Fig. 8 shows the mean BER performance characteristic of a receiver of this invention and of a conventional matched-filter receiver when α₀₁=α₀₋₁=0.25, shown as a function of 2Eb/N₀ (see simulation results A and B). Eb/N₀ is the ratio of the mean received signal energy Eb to the background noise power spectral intensity N₀ per bit. For reference, simulation results (C) for a receiver of this invention (equivalent to a conventional matched-filter receiver) for the case in which ICI does not exist and α₀₁=α₀₋₁=0 are shown in Fig. 8. Also as reference, BER simulation results (D) for a matched filter receiver when ICI does not exist, calculated using equation (32), are also shown. ${P}_{e r r} = \frac{1}{2} ⋅ e r f c ( \sqrt{0.5 ⋅ S N R}$

Here $e r f c \left(x\right) = 1 - e r f \left(x\right) = \frac{2}{\sqrt{π}} {\int }_{x}^{∞} {e}^{- {t}^{2}} ⅆ t$

The BER performance obtained through computer simulations and the BER performance calculated using equation (32) are in considerably good agreement. As is clear from the plot of Fig. 8, if no ICI exists, the BER of a receiver of this invention is no different from the BER obtained from equation (32) for a conventional matched-filter receiver. The BER of the latter is shown in Fig. 8 as "Reference". When ICI exists (in the case α₀₁=α₀₋₁=0.25), the performance of a conventional device which does not perform nonlinear processing is inferior to that of a receiver of this invention, and from the simulation results it is clear that the difference is prominent for a high Eb/N₀ in particular.

Fig. 9 shows the mean BER performance of a turbo-receiver of this invention and of a matched-filter-based receiver, as a function of the ICI coupling coefficient α (=α₀₁=α₀₋₁), with 2Eb/N₀ as a parameter. In Fig. 9, the BER of the matched-filter receiver is shown as "MF". As is clear from the plot, a turbo-receiver of this invention provides satisfactory BER performance over a wide range of values of the ICI coupling coefficient α. However, the greatest improvement in BER in Fig. 9 is for a large value of 2Eb/N₀ (S/N ratio).

The above behavior may be explained as follows. At low S/N ratios, input noise dominates ICI, which in this invention functions to improve the estimated posterior probability, and so data reliability is degraded. On the other hand, when the S/N ratio is sufficiently high, ICI dominates the noise. In such cases, through the benefits of nonlinear signal processing by the receiver, the BER is improved while alleviating the effect of ICI. The above may be regarded as the range of α over which substantial improvement of the BER is achieved.

When the ICI coupling is relatively small (α < 0.3), signals from the subchannel of interest cause distortion of signals transmitted in other subchannels, but this distortion is not so prominent, and data transmitted over adjacent subchannels can be reliably estimated. This estimation for adjacent subchannels is subsequently utilized in posterior probability estimations for the subchannel of interest. Similarly, estimates for the subchannel of interest are subsequently utilized in posterior probability estimates for other adjacent subchannels. By further increasing α, signals in adjacent subchannels are more strongly distorted, and consequently all estimates become extremely unreliable. This fact is reflected in Fig. 9. That is, when α exceeds a certain value, the BER performance begins to worsen markedly as the ICI coupling coefficient increases. A receiver of this invention operates intelligently with respect to the above process. That is, the coefficients of the transfer function of nonlinear units are adjusted according to the noise level N₀ and the ICI coupling coefficients present in ΔE₁, ΔE₂, and ΔEΣ.

### (E) Application to DMT Systems

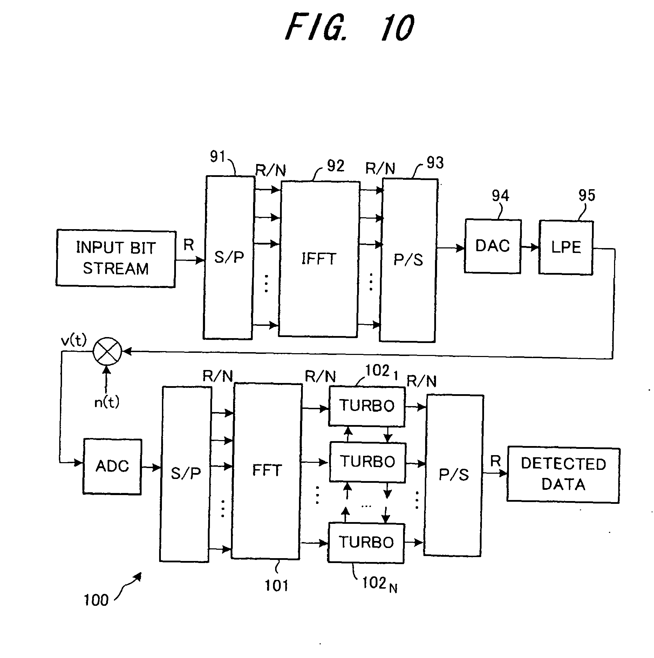

A DMT-based communication system is considered as an application of the turbo-receiver of this invention. Fig. 10 shows the configuration of a DMT-based communication system to which the turbo-receiver is applied; in this configuration, the turbo-receiver of this invention is positioned in a stage after the FFT portion of the receiver in a well-known DMT communication system.

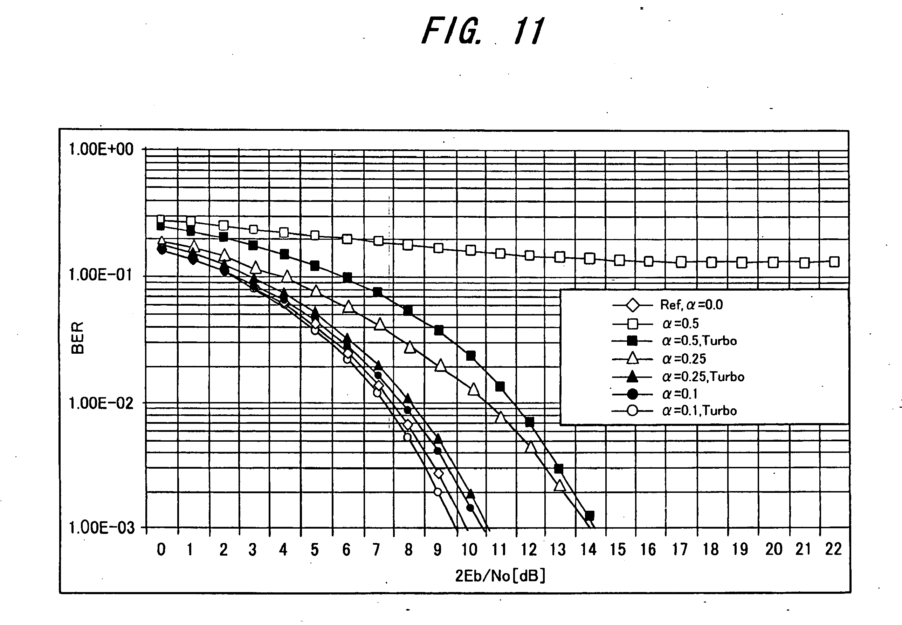

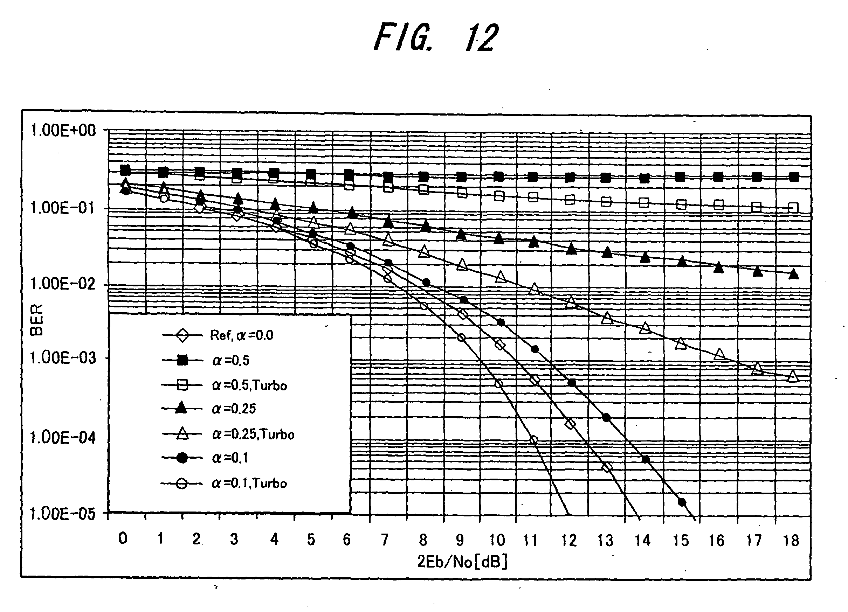

In the communication system of Fig. 10, an input bit stream at a data rate R (bits/sec or bps) after the serial/parallel (S/P) converter 91 is transferred in N parallel subchannels at a new rate R/N (bps). The N-point IFFT 92 combines N parallel data streams for conversion into a single set of sample signals in the realtime domain. In the parallel/serial (P/S) converter 93, these N samples are converted into a serial format, and the result is input continuously into a digital/analog converter (DAC) 94. The output signal from the low-pass filter (LPF) 95 on the DAC output side is a continuous-time DMT signal. In a white Gaussian noise channel, the transmitted DMT signal is degraded due to the white Gaussian noise n(t) when sent to the DMT receiver 100. The receiver executes functions which are the reverse of those of the transmitter. The FFT 101 performs demodulation processing of the signals sent in each subchannel as an N-matched-filter array. Turbo 102₁ to 102_{N} perform subchannel processing based on the turbo algorithm of this invention, so that the BER is improved even if a frequency offset exists. Fig. 11 and Fig. 12 show the BER performance of conventional DMT-based receivers, as well as the BER performance of a DMT receiver, comprising the turbo processing functions of this invention, which performs four turbo processing repetitions. However, Fig. 11 shows the case of N=4 and Fig. 12 shows the case of N=16, and the BER performance is plotted against 2Eb/N₀, taking as a parameter the frequency offset normalized by the frequency difference between channels; the BER characteristics for this invention are indicated by "turbo".

From Fig. 11 and Fig. 12 it is seen that the smaller the frequency offset, the better is the BER characteristic, and that the BER characteristic is better for this invention than for a conventional device.

In the above, the effects of ICI in adjacent subchannels of a multicarrier communication system have been studied. The performance of a conventional matched-filter receiver deteriorates rapidly as the coupling between adjacent subchannels increases, or as the frequency offset increases. In contrast, a receiver of this invention, based on estimated posterior probabilities, is a turbo-receiver in which the receiver of each subchannel passes information to the receivers of adjacent subchannels, and information derived from the receivers of adjacent subchannels is used in order to refine estimated posterior probabilities. Consequently the BER performance of a turbo-receiver of this invention can be improved substantially compared with a conventional matched-filter receiver, because the nonlinear signal processing of the turbo algorithm in this invention can utilize the information obtained from neighboring subchannels to maximum posterior probabilities. The greatest improvement in BER occurs in the area of high S/N in which ICI dominates over Gaussian noise. According to simulation results, a turbo-receiver of this invention can achieve satisfactory performance over a considerably broad range of ICI coupling constants.

## Claims

1. A multicarrier communication system, in which signals are transmitted and received via at least three adjacent subchannels, comprising:
a transmission device, which independently transmits data over at least three adjacent subchannels;
a reception device, comprising a reception portion, provided for each subchannel, which receives data from the corresponding subchannel and performs soft decisions on the received data; and,
means for inputting, to the reception portion of a central subchannel, the soft decision values in reception portions of the two adjacent subchannels; and wherein
the reception portion of the central subchannel uses the soft decision values input from the two adjacent reception portions to adjust the soft decision value for the central subchannel, and makes decisions on received data based on the soft decision values.

2. The multicarrier communication system according to Claim 1, wherein each of said reception portions comprises:
means for computing, as said soft decision values, the difference between the probability that data received from a subchannel of interest is one among two values, and the probability that the data is the other value, taking into account the degree of coupling between subchannels;
means for adjusting the soft decision value for the subchannel of interest, using said soft decision values input from the two reception portions of the adjacent subchannels; and,
a decision portion for making decisions on received data based on the soft decision values.

3. The multicarrier communication system according to Claim 1, wherein the reception portion of said central subchannel comprises:
means for creating a first reference signal when the data transmitted by three subchannel signals is the same, computed taking into account crosstalk from two other subchannels, and for creating second, third, and fourth reference signals for each of the three combinations when exactly one among the three data items transmitted by said three subchannel signals is different, taking into account crosstalk from the other two subchannels;
four correlation means for integrating the results of multiplication of each of the reference signals with the actual received signal;
means for synthesizing the correlation means outputs and for outputting the soft decision value for the subchannel of interest, as well as for outputting three correlation synthesis signals for adjustment of the soft decision value;
first through third addition portions for adding said soft decision values input from the reception portions of adjacent subchannels to said three correlation synthesis signals;
means for computing an adjustment value to adjust the soft decision value for the subchannel of interest, based on the addition results of each of the addition portions;
an adjustment portion for adding said adjustment values to said soft decision value for the subchannel of interest to adjust the soft decision value for the subchannel of interest; and,
a decision portion to make decisions on received data based on the soft decision value.

4. The multicarrier communication system according to Claim 3, wherein said reception device is provided in a stage after the FFT portion constituting a DMT communication system.

5. A reception device, in a multicarrier communication system in which data is transmitted independently via at least three adjacent subchannels, comprising:
soft decision value output means, which computes, as a soft decision value, the difference between the probability that data received from the subchannel of interest is one among two values and the probability that the data is the other value, taking into account the degree of coupling between channels, and moreover which uses the soft decision values input from the reception portions of adjacent subchannels to adjust the soft decision value of the subchannel of interest and output the result; and,
a decision portion, which makes a decision on received data based on the adjusted soft decision value.

6. The reception device according to Claim 5, wherein said soft decision value output means comprises:
means for creating a first reference signal when the data transmitted by three subchannel signals is the same, computed taking into account crosstalk from two other subchannels, and for creating second, third, and fourth reference signals for each of the three combinations when exactly one among the three data items transmitted by said three subchannel signals is different, taking into account crosstalk from the other two subchannels;
four correlation means for integrating the results of multiplication of each of the reference signals with the actual received signal;
means for synthesizing the correlation means outputs and for outputting the soft decision value for the subchannel of interest, as well as for outputting three correlation synthesis signals for adjustment of the soft decision value;
first through third addition portions for adding said soft decision values input from the reception portions of adjacent subchannels to said three correlation synthesis signals;
means for computing an adjustment value to adjust the soft decision value for the subchannel of interest, based on the addition results of each of the addition portions; and,
an adjustment portion for adding said adjustment values to said soft decision value for the subchannel of interest to adjust the soft decision value for the subchannel of interest.

7. The reception device according to Claim 6, wherein said adjustment value computation means comprises:
a first adjustment portion, to compute a first adjustment value to adjust the soft decision value for the subchannel of interest based on the addition result of said first addition portion;
a second adjustment portion, to compute a second adjustment value to adjust the soft decision value for the subchannel of interest based on the addition result of said second addition portion; and,
a third adjustment portion, to compute a third adjustment value to adjust the soft decision value for the subchannel of interest based on the addition result of said third addition portion; and wherein
each adjustment portion comprises a nonlinear unit which indicates a negative amplitude limit for negative input, indicates a positive amplitude limit for positive input, and for which there is a linear relation between input and output on both sides of zero input.

## Patentansprüche

1. Ein Mehrträgerkommunikationssystem, in welchem Signale über mindestens drei benachbarte Unterkanäle gesendet und empfangen werden, umfassend:
eine Sendevorrichtung, die Daten unabhängig über mindestens drei benachbarte Unterkanäle sendet;
eine Empfangsvorrichtung, umfassend einen Empfangsteil, die für jeden Unterkanal vorgesehen ist, welche Daten von den entsprechenden Unterkanälen empfängt und weiche Entscheidungen an den empfangenen Daten durchführt; und,
Mittel zum Eingeben der Werte der weichen Entscheidung in Empfangsteilen der zwei benachbarten Unterkanäle in den Empfangsteil eines mittleren Unterkanals; und wobei
der Empfangsteil des mittleren Unterkanals die Werte der weichen Entscheidung verwendet, die von den zwei benachbarten Empfangsteilen eingegeben werden, um den Wert der weichen Entscheidung für den mittleren Unterkanal einzustellen, und Entscheidungen über empfangene Daten trifft, basierend auf den Werten der weichen Entscheidung.

2. Das Mehrträgerkommunikationssystem nach Anspruch 1, wobei jeder dieser Empfangsteile umfasst:
Mittel zum Berechnen, als die werte der weichen Entscheidung, der Differenz zwischen der Wahrscheinlichkeit, dass Daten, die von einem interessierenden Unterkanal empfangen werden, einen von zwei Werten besitzen, und der Wahrscheinlichkeit, dass die Daten den anderen Wert besitzen, wobei der Kopplungsgrad zwischen Unterkanälen berücksichtigt wird;
Mittel zum Einstellen des Werts der weichen Entscheidung für den interessierenden Unterkanal, wobei die Werte der weichen Entscheidung verwendet werden, die von den zwei Empfangsteilen der benachbarten Unterkanäle eingegeben werden; und
einen Entscheidungsteil zum Treffen von Entscheidungen über empfangene Daten, basierend auf den Werten der weichen Entscheidung.

3. Das Mehrträgerkommunikationssystem nach Anspruch 1, wobei der Empfangsteil des mittleren Unterkanals umfasst:
Mittel zum Erzeugen eines ersten Referenzsignals, wenn die Daten, die durch drei Unterkanalsignale übertragen werden, die gleichen sind, welches unter Berücksichtigung von Nebensprechen von zwei anderen Unterkanälen berechnet wird, und zum Erzeugen zweiter, dritter und vierter Referenzsignale für jede der drei Kombinationen, wenn genau eines der drei Datenelemente, die durch die drei Unterkanalsignale übertragen werden, anders ist, wobei Nebensprechen von den anderen zwei Unterkanälen berücksichtigt wird;
vier Korrelationsmittel zum Integrieren der Ergebnisse einer Multiplikation jedes der Referenzsignale mit dem tatsächlich empfangenen Signal;
Mittel zum Synthetisieren der Korrelationsmittelausgaben und zum Ausgeben des Werts der weichen Entscheidung für den interessierenden Unterkanal, sowie zum Ausgeben von drei Korrelationssynthesesignalen zum Einstellen des Werts der weichen Entscheidung;
erste bis einschließlich dritte Additionsteile zum Addieren der Werte der weichen Entscheidung, die von den Empfangsteilen benachbarter Unterkanäle eingegeben werden, mit den drei Korrelationssynthesesignalen;
Mittel zum Berechnen eines Einstellwerts, um den Wert der weichen Entscheidung für den interessierenden Unterkanal einzustellen, basierend auf den Additionsergebnissen jedes der Additionsteile;
einen Einstellteil zum Addieren der Einstellwerte mit dem Wert der weichen Entscheidung für den interessierenden Unterkanal, um den Wert der weichen Entscheidung für den interessierenden Unterkanal einzustellen; und
einen Entscheidungsteil, um Entscheidungen über empfangene Daten basierend auf dem Wert der weichen Entscheidung zu treffen.

4. Das Mehrträgerkommunikationssystem nach Anspruch 3, wobei die Empfangsvorrichtung in einer Stufe nach dem FFT-Teil vorgesehen ist, wodurch ein DMT-Kommunikationssystem gebildet wird.

5. Eine Empfangsvorrichtung in einem Mehrträgerkommunikationssystem, in welchem Daten unabhängig über mindestens drei benachbarte Unterkanäle übertragen werden, umfassend:
ein Ausgabemittel für einen Wert einer weichen Entscheidung, welches als einen Wert der weichen Entscheidung die Differenz zwischen der Wahrscheinlichkeit, dass Daten, die von dem interessierenden Unterkanal empfangen werden, einen von zwei Werten besitzen, und der Wahrscheinlichkeit, dass die Daten den anderen Wert besitzen, berechnet, wobei der Kopplungsgrad zwischen Kanälen berücksichtigt wird, und welches außerdem die Werte der weichen Entscheidung, die von den Empfangsteilen benachbarter Unterkanäle eingegeben werden, verwendet, um den Wert der weichen Entscheidung des interessierenden Unterkanals einzustellen und das Ergebnis auszugeben; und,
einen Entscheidungsteil, welcher eine Entscheidung über empfangene Daten basierend auf dem eingestellten Wert der weichen Entscheidung trifft.

6. Die Empfangsvorrichtung nach Anspruch 5, wobei das Ausgabemittel für einen wert der weichen Entscheidung umfasst:
Mittel zum Erzeugen eines ersten Referenzsignals, wenn die Daten, die durch drei Unterkanalsignale übertragen werden, die gleichen sind, welches unter Berücksichtigung von Nebensprechen von zwei anderen Unterkanälen berechnet wird, und zum Erzeugen zweiter, dritter und vierter Referenzsignale für jede der drei Kombinationen, wenn genau eines der drei Datenelemente, die durch die drei Unterkanalsignale übertragen werden, anders ist, wobei Nebensprechen von den anderen zwei Unterkanälen berücksichtigt wird;
vier Korrelationsmittel zum Integrieren der Ergebnisse einer Multiplikation jedes der Referenzsignale mit dem tatsächlich empfangenen Signal;
Mittel zum Synthetisieren der Korrelationsmittelausgaben und zum Ausgeben des Werts der weichen Entscheidung für den interessierenden Unterkanal, sowie zum Ausgeben von drei Korrelationssynthesesignalen zum Einstellen des Werts der weichen Entscheidung;
erste bis einschließlich dritte Additionsteile zum Addieren der Werte der weichen Entscheidung, die von den Empfangsteilen benachbarter Unterkanäle eingegeben werden, mit den drei Korrelationssynthesesignalen;
Mittel zum Berechnen eines Einstellwerts, um den Wert der weichen Entscheidung für den interessierenden Unterkanal einzustellen, basierend auf den Additionsergebnissen jedes der Additionsteile; und
einen Einstellteil zum Addieren der Einstellwerte mit dem Wert der weichen Entscheidung für den interessierenden Unterkanal, um den Wert der weichen Entscheidung für den interessierenden Unterkanal einzustellen.

7. Die Empfangsvorrichtung nach Anspruch 6, wobei das Einstellwertberechnungsmittel umfasst:
einen ersten Einstellteil, um einen ersten Einstellwert zu berechnen, um den Wert der weichen Entscheidung für den interessierenden Unterkanal basierend auf dem Additionsergebnis des ersten Additionsteils einzustellen;
einen zweiten Einstellteil, um einen zweiten Einstellwert zu berechnen, um den Wert der weichen Entscheidung für den interessierenden Unterkanal basierend auf dem Additionsergebnis des zweiten Additionsteils einzustellen; und
einen dritten Einstellteil, um einen dritten Einstellwert zu berechnen, um den Wert der weichen Entscheidung für den interessierenden Unterkanal basierend auf dem Additionsergebnis des dritten Additionsteils einzustellen; und wobei
jeder Einstellteil eine nichtlineare Einheit umfasst, welche eine negative Amplitudengrenze für eine negative Eingabe indiziert, eine positive Amplitudengrenze für eine positive Eingabe indiziert und für welche es eine lineare Relation zwischen Eingabe und Ausgabe auf beiden Seiten einer Nulleingabe gibt.

## Revendications

1. Système de communication multiporteuse, dans lequel des signaux sont émis et reçus par l'intermédiaire d'au moins trois sous-canaux adjacents, comprenant :
un dispositif d'émission, qui émet indépendamment des données sur au moins trois sous-canaux adjacents,
un dispositif de réception, comprenant une partie de réception, prévue pour chaque sous-canal, qui reçoit des données du sous-canal correspondant et exécute des décisions temporaires sur les données reçues, et
un moyen destiné à appliquer en entrée à la partie de réception d'un sous-canal central, les valeurs de décisions temporaires dans les parties de réception des deux sous-canaux adjacents, et où
la partie de réception de sous-canal central utilise les valeurs de décisions temporaires appliquées en entrée depuis les deux parties de réception adjacentes pour ajuster les valeurs de décisions temporaires pour le sous-canal central, et prend des décisions sur les données reçues sur la base des valeurs de décisions temporaires.

2. Système de communication multiporteuse selon la revendication 1, dans lequel chacune desdites parties de réception comprend :
un moyen destiné à calculer, en tant que lesdites valeurs de décisions temporaires, la différence entre la probabilité que des données reçues d'un sous-canal concerné soient une première parmi deux valeurs, et la probabilité que les données soient l'autre valeur, en prenant en compte le degré de couplage entre les sous-canaux,
un moyen destiné à ajuster la valeur de décision temporaire pour le sous-canal concerné en utilisant lesdites valeurs de décisions temporaires reçues en entrée des deux parties de réception des sous-canaux adjacents, et
une partie de décision destinée à prendre des décisions sur les données reçues sur la base des valeurs de décisions temporaires.

3. Système de communication multiporteuse selon la revendication 1, dans lequel la partie de réception dudit sous-canal central comprend :
un moyen destiné à créer un premier signal de référence lorsque les données transmises par trois signaux de sous-canaux sont les mêmes, calculées en prenant en compte la diaphonie provenant de deux autres sous-canaux, et destiné à créer des second, troisième et quatrième signaux de référence pour chacune des trois combinaisons lorsque exactement un élément parmi les trois éléments de données transmis par lesdits trois signaux de sous-canaux est différent, en prenant en compte la diaphonie provenant des deux autres sous-canaux,
quatre moyens de corrélation destinés à intégrer les résultats de la multiplication de chacun des signaux de référence par le signal réel reçu,
un moyen destiné à synthétiser les sorties des moyens de corrélation et destiné à fournir en sortie la valeur de décision temporaire pour le sous-canal concerné, de même que pour fournir en sortie trois signaux de synthèse de corrélation en vue d'un ajustement de la valeur de décision temporaire,
des première à troisième parties d'addition destinées à ajouter lesdites valeurs de décisions temporaires reçues en entrée des parties de réception de sous-canaux adjacents auxdits trois signaux de synthèse de corrélation,
un moyen destiné à calculer une valeur d'ajustement pour ajuster la valeur de décision temporaire pour le sous-canal concerné, sur la base des résultats d'addition de chacune des parties d'addition,
une partie d'ajustement destinée à ajouter lesdites valeurs d'ajustement à ladite valeur de décision temporaire pour le sous-canal concerné afin d'ajuster la valeur de décision temporaire pour le sous-canal concerné, et
une partie de décision pour prendre des décisions sur les données reçues sur la base de la valeur de décision temporaire.

4. Système de communication multiporteuse selon la revendication 3, dans lequel ledit dispositif de réception est prévu dans un étage après la partie de transformation FFT constituant un système de communication DMT.

5. Dispositif de réception, dans un système de communication multiporteuse dans lequel des données sont transmises indépendamment par l'intermédiaire d'au moins trois sous-canaux adjacents, comprenant :
un moyen de sortie de valeur de décision temporaire, qui calcule, en tant que valeur de décision temporaire, la différence entre la probabilité que des données reçues du sous-canal concerné représentent une valeur parmi deux valeurs et la probabilité que les données représentent l'autre valeur, en prenant en compte le degré de couplage entre canaux, et qui utilise de plus les valeurs de décisions temporaires reçues en entrée des parties de réception de sous-canaux adjacents pour ajuster la valeur de décision temporaire du sous-canal concerné et fournir en sortie le résultat, et
une partie de décision qui prend une décision sur des données reçues sur la base de la valeur de décision temporaire ajustée.

6. Dispositif de réception selon la revendication 5, dans lequel ledit moyen de sortie de valeur de décision temporaire comprend :
un moyen destiné à créer un premier signal de référence lorsque les données transmises par trois signaux de sous-canaux sont les mêmes, calculées en prenant en compte la diaphonie provenant de deux autres sous-canaux, et destiné à créer des second, troisième et quatrième signaux de référence pour chacune des trois combinaisons lorsque exactement un élément parmi les trois éléments de données transmis par lesdits trois signaux de sous-canaux est différent en prenant en compte la diaphonie provenant des deux autres sous-canaux,
quatre moyens de corrélation destinés à intégrer les résultats de la multiplication de chacun des signaux de référence par le signal réel reçu,
un moyen destiné à synthétiser les sorties des moyens de corrélations et destiné à fournir en sortie la valeur de décision temporaire pour le sous-canal concerné, de même que destiné à fournir en sortie trois signaux de synthèse de corrélation en vue d'un ajustement de la valeur de décision temporaire,
des première à troisième parties d'addition destinées à ajouter lesdites valeurs de décisions temporaires reçues en entrée des parties de réception de sous-canaux adjacents auxdits signaux de synthèse de corrélation,
un moyen destiné à calculer une valeur d'ajustement pour ajuster la valeur de décision temporaire pour le sous-canal concerné, sur la base des résultats d'addition de chacune des parties d'addition, et
une partie d'ajustement destinée à ajouter lesdites valeurs d'ajustement à ladite valeur de décision temporaire pour le sous-canal concerné afin d'ajuster la valeur de décision temporaire pour le sous-canal concerné.

7. Dispositif de réception selon la revendication 6, dans lequel ledit moyen de calcul de valeur d'ajustement comprend :
une première partie d'ajustement, pour calculer une première valeur d'ajustement afin d'ajuster la valeur de décision temporaire pour le sous-canal concerné sur la base du résultat d'addition de ladite première partie d'addition,
une seconde partie d'ajustement, destinée à calculer une seconde valeur d'ajustement afin d'ajuster la valeur de décision temporaire pour le sous-canal concerné sur la base du résultat d'addition de ladite seconde partie d'addition, et
une troisième partie d'ajustement, pour calculer une troisième valeur d'ajustement afin d'ajuster la valeur de décision temporaire pour le sous-canal concerné sur la base du résultat d'addition de ladite troisième partie d'addition, et où
chaque partie d'ajustement comprend une unité non linéaire qui indique une limite d'amplitude négative pour une entrée négative, indique une limite d'amplitude positive pour une entrée positive, et pour laquelle il existe une relation linéaire entre l'entrée et la sortie des deux côtés de l'entrée zéro.
